# EUROPEAN PATENT SPECIFICATION

(11) **EP 2 948 297 B1**
(45) Date of publication and mention of the grant of the patent: **16.08.2017**
(21) Application number: 13721383.1
(22) Date of filing: 22.01.2013
(51) Int. Cl.: B29D 11/00

(54) **MACHINE FOR COATING AN OPTICAL ARTICLE WITH A PREDETERMINED COATING COMPOSITION AND METHOD FOR USING THE MACHINE**
MASCHINE ZUR BESCHICHTUNG EINES OPTISCHEN ARTIKELS MIT EINER VORDEFINIERTEN BESCHICHTUNGSZUSAMMENSETZUNG UND VERFAHREN ZUR VERWENDUNG DER MASCHINE
MACHINE PERMETTANT DE REVÊTIR UN ARTICLE OPTIQUE AVEC UNE COMPOSITION DE REVÊTEMENT PRÉDÉTERMINÉE ET PROCÉDÉ PERMETTANT D'UTILISER LA MACHINE

(43) Date of publication of application: 02.12.2015
(73) Proprietor: Essilor International (Compagnie Générale d'Optique), 94220 Charenton-le-Pont (FR)
(72) Inventor: FOURNAND, Gérald, F-94220 Charenton-Le-Pont (FR)
(74) Representative: Santarelli
(86) International application number: PCT/IB2013/000548
(87) International publication number: WO 2014/114974

(56) References cited:
- WO-A1-2006/114686
- GB-A- 1 530 833
- US-A- 5 820 673
- US-A1- 2006 285 108
- US-A1- 2012 135 143

## Description

### FIELD OF THE INVENTION

The invention relates to machines for coating an optical article such as an ophtalmic lens, and in particular spectacle lenses preferably mounted on a spectable frame, with a predetermined coating composition such as an anti-soiling coating composition or an anti-fogging coating composition or an adhesion coationg composition.

The invention further relates to a method for using such a machine.

### BACKGROUND ART

It is well known that lenses, and in particular spectacle lenses, comprise an ophthalmic substrate having geometrical features adapted to the wearer.

The ophthalmic substrate requires the adding of coatings, for instance an anti-abrasive coating to increase the abrasion resistance of the lens, an anti-reflective coating to decrease the reflection of light and an anti-soiling coating or an anti-fogging coating applied over the anti-reflective coating. The anti-soiling coating provides an outer coating that can be more resistant to contamination for instance by organic impurities and more easily cleaned than the anti-reflective coating whereas the anti-fogging coating provides an outer coating that can prevent any fog formation in very damp environments or during quick temperature changes.

The wearer of the lens can wish to replace such an anti-soiling topcoat or an anti-fogging topcoat because the effects of said respective topcoat can decrease over time or might be misfit to a new environment.

One known method to remove the first anti-soiling coating and replace it by a second anti-soiling coating is described in US patent application US 2005/0008784, in which a low pressure plasma treatment is carried out to remove the first anti-soiling coating initially coated on the lens. Next, the second anti-soiling coating (the new one) is coated on the lens for instance by wiping with a woven or non-woven fabric, spraying, casting, rolling or immersing the lens. Thus, the first anti-soiling coating is removed and replaced by the second anti-soiling coating.

Such a method is also known from the International patent application WO 2004/111691 in which an activation treatment of technical species at about atmospheric pressure is carried out, in particular a corona discharge treatment or a plasma treatment, for removing an initial outermost coating layer of a coated optical lens. Next, a final coating, in particular an anti-soiling coating, is deposited on the lens by vacuum, dip, spin, spray or stamping coating. Thus, the initial outermost coating of the lens is removed and replaced by an anti-soiling coating.

US-A-2006/285108 discloses a further known prior art. The invention is thus directed to a machine for coating an optical article with a predetermined coating composition, which machine is simple to implement, compact and economic.

### SUMMARY OF THE INVENTION

The invention accordingly provides a machine according to claim 1 and a method according to claim 18. The vacuum nebulization treatment, also called vacuum spraying treatment, of the machine according to the invention ensures a wet-coating deposition of a thin coating in a controlled manner (due to the control unit) and in a clean environment (because the vacuum pump causes to suck gases from the vacuum chamber before the vacuum spraying treatment), therefore no floating particle may be trapped by the liquid droplets.

Thanks to the machine according to the invention, the liquid coating composition may be, prior to the deposition process, at atmospheric pressure or close to atmospheric pressure, before being nebulized in the vacuum chamber.

A vacuum pump is used to obtain the vacuum in the chamber. The vacuum pump which is connected (a flow connection causing the pump to suck) to the vacuum chamber before the carrying out of the vacuum nebulization treatment so that the quality of the vacuum spraying treatment is increased. The vacuum pump can be connected or disconnected during the vacuum nebulization treatment.

We further already known from a patent application of the Applicant, which is not published at the moment, PCT/IB2012/053624, a machine and a method using this machine, the method comprising a step of carrying out a plasma treatment for removing an initial outermost coating layer of a coated optical lens, and a step of depositing a final coating by vacuum evaporation in the same chamber. This solution provides to deposit a final coating on a cleaned surface without taking the lenses out of the cleaning chamber. The liquid composition used to form the final coating must be evaporable.

The vacuum nebulization treatment of the machine according to the invention allows the deposition of compounds that could or could not be evaporated, so that a larger range of liquid coating composition can be used compared to the known evaporation treatment mentioned above.

Furthermore, the machine according to the invention is compact. Thus, the machine according to the invention can be placed at an optician's premises, the optician being easily able to use said machine.

Indeed, the machine of this invention may be operated by an optician without having to remove spectacle lenses and/or send them to the manufacturer. It is particularly intended for depositing an anti-soiling or anti-fogging topcoat on spectacles lenses of known or unknown provenance such as on solar lenses which are usually not coated by an inorganic anti-reflective coating, or replacing an existing anti-soiling topcoat due to either reduced performances or because the owner desire another kind of topcoat, such as an anti-fogging, or vice-versa. Further, other kind of topcoats may be deposited.

It will be noted that the term "nebulization" here corresponds to a conversion of a liquid to a fine spray or an atomization. Next, the expression "mist of aerosol droplets" here means that the nebulizer is configured to transform (nebulize) the liquid coating composition into a plurality of a liquid droplets arranged in suspension under the shape of a mist.

According to preferred features, said control unit is configured to control said nebulizer for coating said optical article with said predetermined coating composition.

According to preferred features, the machine further comprises a plasma generator configured to carry out a vacuum plasma treatment of said optical article in said vacuum chamber, said control unit being configured to control said plasma generator for removing an initial outermost coating of said optical article, or for activating a surface of the optical article, and to cause said vacuum pump to suck gases from said vacuum chamber during vacuum plasma treatment.

In other words, the machine according to the invention is configured to coat or recoat the optical article first by applying a plasma treatment to the initial base coating and next by nebulizing a predetermined coating on the optical article.

The two distinct treatments are advantageously implemented in the same vacuum chamber of the machine so that the machine is simple and economic.

The vacuum pump is thus connected to the vacuum chamber between the two treatments successively carried out.

It will be noted that the plasma treatment is convenient because neither does it deteriorate the anti-reflective coating which is generally under the initial outermost coating, such as an anti-soiling or anti-fogging coating, nor does it deteriorates any surface polymeric film which could be present under the outermost coating in place of the anti-reflective stack, which could be the case of an universal adhesion coating described below, deposited for instance during a previous use of the invention.

According to features preferred as being very simple, convenient and economical for embodying the machine according to the invention:
- said predetermined liquid coating composition forms a topcoat on said optical article after said vacuum nebulization treatment, which topcoat is configured to bring a predetermined function to said optical article, such as anti-soiling or anti-fogging;
- said predetermined liquid coating composition comprises monomers that may polymerize into a polymeric coating on said optical article after said vacuum nebulization treatment, such as an universal adhesion coating which is configured to receive a predetermined topcoat;
- after said vacuum nebulization treatment to form said polymeric coating, said control unit and said nebulizer are further configured to carry out another vacuum nebulization treatment in said vacuum chamber by nebulizing another predetermined coating composition which is liquid into a mist of aerosol droplets, said droplets being directed towards at least said surface of said optical article to form a topcoat configured to bring a predetermined function to said optical article, such as anti-soiling or anti-fogging, and said control unit is further configured to cause said vacuum pump to suck gases from said vacuum chamber between said two vacuum nebulization treatments to bring said vacuum chamber to another predetermined required pressure for said another vacuum nebulization treatment; and/or
- the machine further comprises an evaporation device configured to carry out a vacuum evaporation treatment of an anti-soiling or anti-fogging coating composition for depositing it on said polymeric coating deposited by nebulization on said optical article in said vacuum chamber, said control unit being configured to control said evaporation device for recoating said optical article with said anti-soiling or anti-fogging coating composition and being configured to cause said vacuum pump not to suck gases from said vacuum chamber during vacuum evaporation treatment.

According to preferred features, said nebulizer comprises a nozzle system and said machine further comprises a container which contains a determined volume of said predetermined coating composition and at least one conduit configured to connect said container to said vacuum chamber in order to allow a fluidic communication between said container and said nebulizer.

The machine according to the invention does not need to store the liquid coating composition into a container enabling to support high pressure, compared to usual spraying-cans.

Further there is no need for a propellant with boiling point lower than ambient temperature. This means that the container might be less sturdy than actual spraying cans and that an accidental breach of such container will not lead to a pulverization of the liquid composition into the atmosphere. Indeed, most of the energy needed to propel and nebulize the liquid into an aerosol is provided by the chamber being at vacuum pressure, while the container is never at a pressure much higher than atmospheric pressure.

According to features preferred as being very simple, convenient and economical for embodying the machine according to the invention:
- said nozzle system comprises at least one nozzle head disposed in said vacuum chamber and said machine further comprises at least one inlet port and at least one outlet port in communication with said at least one inlet port, said at least one conduit being in fluidic communication with said at least one inlet port and said at least one nozzle head being in fluidic communication with at least one outlet port;
- said nozzle system is configured to direct said droplets towards at least a surface of said optical article according to a conical or pseudo-conical projection defined by a predetermined solid angle;
- said machine further comprises a support on which said optical article is configured to be received, said support and said nozzle system being configured to place said optical article at a predetermined distance from said nozzle system;
- said container is configured for propelling said determined volume of said predetermined coating composition in said at least one conduit until said nozzle system where said predetermined coating composition is nebulized into said mist of aerosol droplets in said vacuum chamber;
- said container comprises a gaseous propeller for propelling said determined volume of said predetermined coating composition in said at least one conduit and towards said nozzle system;
- said container comprises an internal space containing said determined volume of said predetermined coating composition, said internal space having an internal pressure which is equal or close to atmospheric pressure;
- said predetermined coating composition is polymerizable, said machine further comprises a polymerization device and said control unit is further configured to control said polymerization device to polymerize said predetermined coating composition after said vacuum nebulization treatment;
- said polymerization device is formed by at least one activation light source or by a plasma generator;
- said predetermined coating composition contains solvent and said control unit is configured to cause the vacuum pump to suck gases from said vacuum chamber after said vacuum nebulization treatment for drying said optical article and evaporating said solvent;
- said machine further comprises an inlet circuit connected to said vacuum chamber and an inlet valve mounted on said inlet circuit, said control unit being further configured to open said inlet valve for a predetermined time in order to vent said vacuum chamber; and/or
- said predetermined required pressure for said vacuum nebulization treatment is comprised between 100mbar and 0.01 mbar or less, preferably between 10mbar and 0.05mbar, and more preferably between 1 mbar and 0.1mbar, in said vacuum chamber at the start of said vacuum nebulization treatment.

It will be noted that the term "vacuum chamber" means that the pressure of the interior space of the chamber is for instance comprised between 100mbar and 0.01 mbar or less at least at the start of the vacuum nebulization treatment.

The invention also provides a method for using such a machine as described above, comprising the steps of:
- selecting an optical article having an initial base coating;
- loading said optical article into an internal space of a vacuum chamber of said machine;
- connecting a container containing a determined volume of a predetermined liquid coating composition to a nebulizer of said machine in order to allow a fluidic communication between said container and said vacuum chamber;
- causing the vacuum pump of said machine to suck gases from said vacuum chamber to bring said vacuum chamber to a predetermined required pressure for a vacuum nebulization treatment; and
- carrying out said vacuum spraying treatment and controlling it for nebulizing said predetermined coating composition which is liquid into a mist of aerosol droplets and to direct said droplets towards at least a surface of said optical article to form a coating;
- unloading the optical article from the vacuum chamber.

Like the machine according to the invention, the method using the machine is particularly simple, convenient and fast to implement.

According to features preferred as being very simple, convenient and economical for embodying the method according to the invention:
- said method further comprises the step of carrying out a vacuum plasma treatment with a plasma generator of said machine and controlling it for removing an initial outermost coating of said optical article or for activating a surface of the optical article, and the step of causing the vacuum pump to suck gases from said vacuum chamber during said vacuum plasma treatment;
- said predetermined liquid coating composition forms a topcoat on said optical article after said vacuum nebulization treatment, which topcoat is configured to bring a predetermined function to said optical article, such as anti-soiling or anti-fogging;
- said predetermined liquid coating composition comprises monomers that may polymerize into a polymeric coating on said optical article after said vacuum nebulization treatment, such as an universal adhesion coating, and said method further comprises, after said step of carrying out said vacuum nebulization treatment to form said polymeric coating, the steps of causing said vacuum pump to suck gases from said vacuum chamber to bring said vacuum chamber to another predetermined required pressure for another vacuum nebulization treatment, and carrying out said another vacuum nebulization treatment in said vacuum chamber and controlling it for nebulizing another predetermined coating composition which is liquid into a mist of aerosol droplets, said droplets being directed towards at least said surface of said optical article to form a topcoat configured to bring a predetermined function to said optical article, such as anti-soiling or anti-fogging;
- said predetermined liquid coating composition comprises monomers that may polymerize into a polymeric coating on said optical article after said vacuum nebulization treatment, such as an universal adhesion coating, and said method further comprises, after said step of carrying out said vacuum nebulization treatment to form-said polymeric coating, the steps of causing the vacuum pump not to suck gases from the vacuum chamber, and carrying out a vacuum evaporation treatment with an evaporation device of said machine and controlling it for recoating said optical article with an anti-soiling or anti-fogging coating composition; and/or
- said predetermined liquid coating composition contains solvent and said method further comprises, after said step of carrying out said vacuum nebulization treatment to form a coating, the step of drying said optical article by causing the vacuum pump to suck gases from said vacuum chamber in order to evaporate said solvent.

### BRIEF DESCRIPTION OF THE DRAWINGS

The description of the invention now continues with a detailed description of a preferred embodiment given hereinafter by way of non-limiting example and with reference to the appended drawings. In these drawings:
- Figure 1 is a schematic view of a machine for coating according to the invention;
- Figures 2 and 3 are partially schematic views of the machine showing a vacuum chamber and a nebulizer of the machine, a door of the vacuum chamber being respectively open and closed;
- Figures 4 and 5 are partially schematic views of the machine showing a vacuum chamber and an evaporation device of the machine, the door of the vacuum chamber being respectively open and closed; and
- Figures 6 to 8 are block diagrams illustrating steps for using the machine for recoating an optical article according to respective embodiments.

### DETAILED DESCRIPTION OF PREFERED EMBODIMENTS

In this description, the expression "comprised between" used in connection with a range of values should be understood as including the specific upper and lower values of this range.

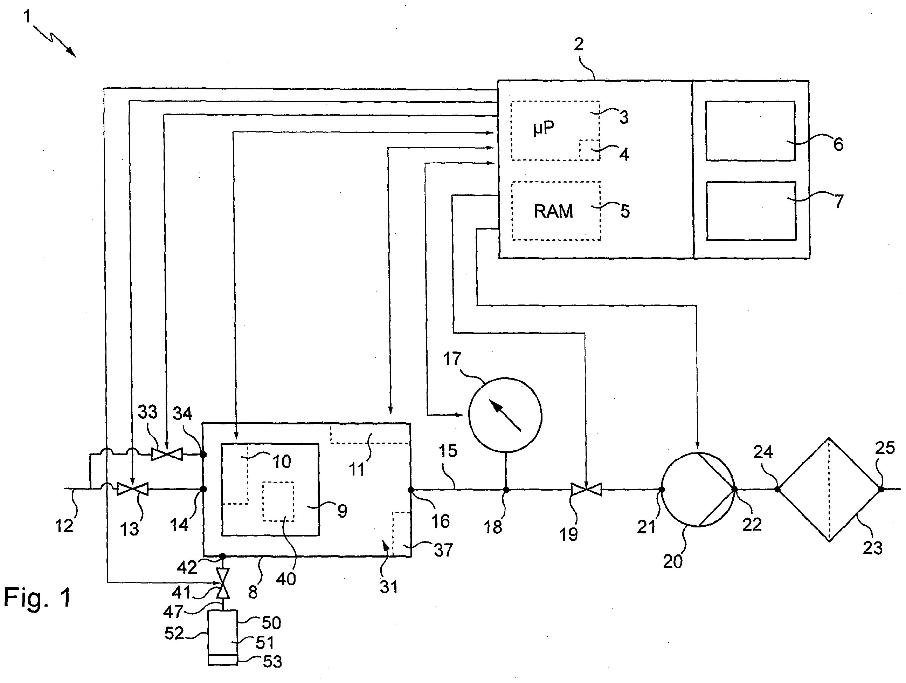

Figure 1 shows a recoat treatment machine 1 for recoating an optical article formed here by spectacle lenses mounted on a spectacle frame.

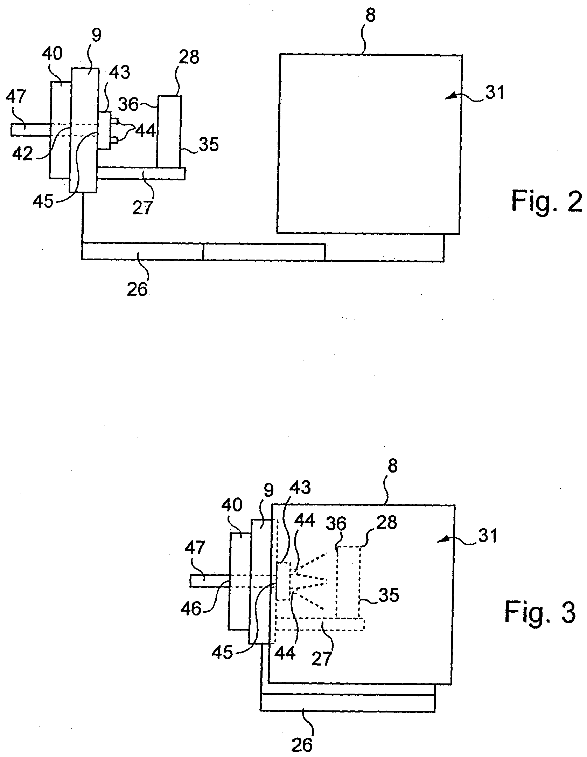

The spectacle lenses 28 are shown on Figures 2 to 5. Each lens has a first surface 35 and a second surface 36 which is opposite to the first surface 35. The first surface 35 is for instance a concave surface of each lens of the spectacle lenses whereas the second surface 36 is for instance a convex surface of each said lens.

The machine 1 comprises:
- a vacuum chamber 8;
- a plasma generator 11 connected to the vacuum chamber 8;
- an evaporation device 10 connected to the vacuum chamber 8;
- a nebulizer 40 connected to the vacuum chamber 8;
- a polymerization device 37 connected to the vacuum chamber 8;
- a container 50 connected to the nebulizer 40 by the intermediary of a propelling circuit 47;
- an inlet circuit 12 connected to the vacuum chamber 8;
- a vacuum pump 20 connected to the vacuum chamber 8 by the intermediary of an outlet circuit 15; and
- a control unit 2 configured to control the plasma generator 11, the evaporation device 10, the nebulizer 40 and the polymerization device 37.

The vacuum chamber 8 comprises an interior space 31 configured to receive the spectacle lenses 28 mounted on a spectacle frame.

In a variant, only one lens is mounted in the interior space 31, or two lenses, without the spectacle frame.

The vacuum chamber 8 further comprises a door 9 which is removable (see description of Figures 2 to 5 below).

The plasma generator 11 is directly connected to the vacuum chamber 8.

The plasma generator 11 generally comprises a high-frequency generator.

The evaporation device 10 and the nebulizer 40 are both placed in the vacuum chamber 8 (i.e. mounted on the door 9 of the vacuum chamber 8) (see below).

The polymerisation device 37 is directly connected to the vacuum chamber 8.

The polymerisation device 37 generally comprises light sources, such as ultraviolet (UV) light or infrared (IR) light.

The vacuum chamber 8 further comprises a first inlet port 14 and a second inlet port 34 both connected to the inlet circuit 12.

The vacuum chamber 8 further comprises a third inlet port 42 connected to the propelling circuit 47.

The machine further comprises a gas inlet valve 13 mounted on the inlet circuit 12 and an inlet valve 33 which is also mounted on the inlet circuit 12, parallel to the gas inlet valve 13.

The machine further comprises a spraying valve 41 mounted on the propelling circuit 47.

The vacuum chamber 8 further comprises an outlet port 16 connected to the outlet circuit 15.

The vacuum pump 20 is connected to the outlet circuit 15 by the intermediary of an admission port 21 of the vacuum pump 20 and by the intermediary of an exit port 22 of the vacuum pump 20 so that the outlet circuit 15 passes through the vacuum pump 20.

The machine 1 further comprises a pressure sensor 17 which is connected to the outlet circuit 15 by the intermediary of a branching point 18.

The machine 1 further comprises a vacuum valve 19 which is mounted on the outlet circuit 15, between the branching point 18 and the admission port 21 of the vacuum pump 20.

The machine 1 further comprises a filtering device 23 here formed by a gas filter.

The filtering device 23 is connected to the outlet circuit 15 by the intermediary of an entrance port 24 and an exhaust port 25 of said filtering device 23.

The exhaust port 25 is linked to the atmosphere.

The filtering device 23 is thus mounted at the end of the outlet circuit 15, after the vacuum pump 20.

The container 50 comprises a rigid casing 52 delimiting an internal space 51 which is configured to contain a determined volume of a predetermined liquid coating composition, such as an anti-soiling coating composition or an anti-fogging coating composition or an adhesion coating composition.

The container 50 comprises a propeller 53 (here a gas, such as air, at atmospheric pressure) for propelling the determined volume of the predetermined liquid coating composition from the internal space 51 in the propelling circuit 47 until the spraying valve 41 and the third inlet port 42.

The propelling circuit is here formed by a conduit 47 having a first portion connected both to the internal space 51 of the container 50 and to the spraying valve and a second portion connected both to the spraying valve and to the vacuum chamber 8 by the intermediary of the third inlet port 42.

The conduit 47 is configured to allow a fluidic communication between the container 50 and the nebulizer 40.

The control unit 2 comprises a data processing system comprising a microprocessor 3 having a memory 4, in particular non volatile, allowing a software application, in other words a computer program, to be loaded and stored therein, and which allows the method for recoating the spectacle lenses 28 to be carried out when it is executed in the microprocessor 3.

The non-volatile memory is for instance a read only memory.

The data processing system further comprises a memory 5, for instance volatile, allowing storage of data during the execution of the software and the implementation of the method.

The volatile memory 5 is for instance a random access memory or an electrically erasable programmable read only memory.

The control unit 2 further comprises a communication interface configured to communicate with the data processing system.

The communication interface is here formed by a graphic interface 6 and a keyboard 7.

The control unit 2 is configured to control and exchange data with the gas inlet valve 13, the nebulizer 40, the evaporation device 10, the plasma generator 11, the pressure sensor 17, the spraying valve 42, the vacuum valve 19 and the vacuum pump 20.

Figures 2 and 3 show in detail the nebulizer 40, the vacuum chamber 8 and its removable door 9 respectively in an open state and in a closed state (the evaporation device 10 is not represented here).

The vacuum chamber 8 comprises a displacement member 26 configured to slide the door 9 between its open and closed states.

The machine 1 comprises a first support 27 also mounted on the interior face of the door 9.

The first support 27 is configured to receive the spectacle lenses 28 mounted on the spectacle frame.

The open state of the door 9 enables the loading of the spectacle lenses 28 together with the spectacle frame on the first support 27.

The nebulizer 40 comprises a nozzle system 43 which is here mounted on the interior face of the door 9.

The third inlet port 42 is formed on the exterior face of the door 9 whereas the machine 1 further comprises a third outlet port 45 formed on the interior face of the door 9 and communicating with the third inlet port 42.

The conduit 47 passes through the nebulizer 40 and is connected to the third inlet port 42.

The nozzle system 43 here comprises two nozzle heads 44 directed towards the optical article 28.

Each nozzle head 44 here faces the second surface 36 of the respective lenses 28.

When the conduit 47 is connected and the spectacle lenses 28 are received on the first support 27, the door 9 can be moved from its open state to its closed state as shown on Figure 3.

In this closed state of the door 9, the spectacle lenses 28 together with the spectacle frame and the nozzle heads 44 are in the vacuum chamber 8.

The nebulizer 40 is configured to nebulize the predetermined coating liquid composition into a mist of aerosol droplets and the nozzle heads 43 are configured to direct said droplets towards at least one of the surfaces 35, 36 of the optical article 28, according to a conical or pseudo-conical direction.

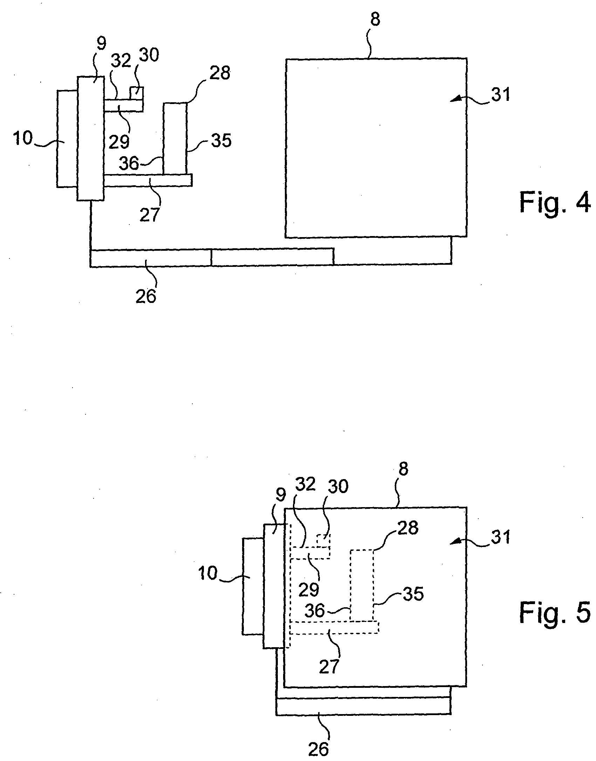

Figures 4 and 5 show in detail the evaporation device 10, the vacuum chamber 8 and its removable door 9 respectively in an open state and in a closed state (the nebulizer 40 is not represented here).

The machine 1 further comprises a second support 29 mounted on the interior face of the door 9.

The second support 29 is configured to receive a crucible 30 which is configured to be imbibed with a second predetermined liquid coating composition, such as an anti-soiling coating composition or an anti-fogging coating composition.

The second support 29 forms a part of the evaporation device 10.

The evaporation device 10 is here formed by a heating module 32 mounted on the interior face of the door 9, connected both to the second support 29 and to a power supply source (not shown) in order to heat the second predetermined liquid coating composition via the crucible 30 and via the second support 29.

The open state of the door 9 enables the loading of the crucible 30 imbibed with the second predetermined liquid coating composition on the second support 29.

When the crucible 30 and the spectacle lenses 28 are received on their respective support 29, 27, the door 9 can be moved from its open state to its closed state as shown on Figure 5.

In this closed state, the door 9, the spectacle lenses 28 together with the spectacle frame and the crucible 30 imbibed with the second predetermined liquid coating composition are in the vacuum chamber 8.

In a convenient way, the machine 1 is thus configured to be provided to an optician who can use said machine 1 when the wearer of the spectacle lenses 28 comes into his shop.

The spectacle lenses 28 here comprises an ophthalmic lens substrate on which are coated firstly an anti-reflective coating layer and secondly an initial anti-soiling coating layer (which form a topcoat).

If the effects of the initial anti-soiling layer are decreased, which might happen after some months of wearing, the optician can recoat a new anti-soiling layer on the spectacle lenses 28.

In a variant, the initial coating layer is not an anti-soiling coating but an anti-fogging coating. After winter, the wearer may wish to replace the anti-fogging coating by an anti-soiling coating.

We will now describe in details the method for using the machine 1 in order to recoat the spectacle lenses 28 with an anti-soiling coating composition, in reference to Figure 4.

For that purpose, the optician takes the spectacle lenses 28 (step of selecting the optical article) and selects the adapted anti-soiling composition to recoat.

Here, the anti-soiling composition is a 1% liquid solution of chemical compound in HFE7100 solvent, which solvent is distributed by the 3M™ Company. More precisely, the chemical compound is OPTOOL^{®} DSX from the DAIKIN Company.

The optician fills the container 50 with a determined volume, here 2mL, of this composition. The container has a volume greater than 2mL and the remaining volume is filled with air at atmospheric pressure. The determined volume is here injected with a syringe through a rubber cork (not represented) of the container 50.

In a variant, the container is a disposable container already pre-filled with the determined volume of the composition. In such case, the machine may comprise a connector member configured to perforate a membrane of the container to reach the liquid or to connect the conduit 47 to an internal conduit of the container, in order to put in fluidic communication the conduit 47 and the inside of the container where the liquid composition is present.

The optician opens the door 9 of the vacuum chamber 8 and at step 100 loads the spectacle lenses 28 on the first support 27. The lenses are here finished lenses of 65mm diameter.

The optician closes the door 9 of the vacuum chamber 8.

Next, the optician starts the treatment program for recoating the spectacle lenses 28 via the keyboard 7 and the graphic interface 6.

The control unit 2 then takes over the recoat treatment.

The vacuum pump 20 is started at step 101 and the vacuum valve 19 is opened at step 102 in order to connect (a flow connection) the vacuum pump 20 to the vacuum chamber 8 for evacuating air from the interior space 31 of the vacuum chamber 8 via the outlet circuit 15. The vacuum pump 20 is thus able to suck the gases from the vacuum chamber 8.

The control unit 2 waits and takes pressure measurements via the pressure sensor 17 until the vacuum chamber pressure reaches about 0.4mbar.

Optionally the gas inlet valve 13 is then opened at step 103 in order to allow gas to enter in the vacuum chamber 8 via the inlet circuit 12 to have a stable pressure in the vacuum chamber 8.

The gas is here atmospheric air.

The evacuation time of the vacuum chamber 8 is approximately 120s.

The plasma generator 11 is then set at step 104 with a predetermined power and for a predetermined time in order to carry out the vacuum plasma treatment for removing the initial outermost anti-soiling coating on the spectacle lenses 28, which one wants to replace.

Here, the plasma generator power is about 50-200W (5-20 W/L according to the volume of the vacuum chamber 8 which is here 10L) and the time of the plasma treatment is approximately equal to 120s.

The vacuum plasma treatment allows removal of all the initial outermost coating of the spectacle lenses 28 without damaging the anti-reflective coating.

Further, the plasma treatment allows activation of the surfaces 35 and 36 of the spectacle lenses 28, in particular the anti-reflective coating in order to increase the adherence properties.

The vacuum valve 19 is then closed at step 105 in order to disconnect (a flow interruption) the vacuum pump 20 from the vacuum chamber 8. The vacuum pump 20 is thus able not to suck the gases from the vacuum chamber 8.

During the plasma treatment, the gases sucked by the vacuum pump 20 are filtered by the filtering device 23 before exhausting to the atmosphere.

At this stage of the recoat treatment, the control unit 2 optionally implements a venting step 106, depending on the required pressure for nebulization.

At step 106, the inlet valve 33 is opened for a predetermined time, for instance 10-20s, in order to vent the vacuum chamber 8 and raise the pressure in the chamber 8.

The inlet valve 33 is then closed to end the venting step 106.

Next, the vacuum valve 19 is opened at step 107 in order to reconnect (a flow connection) the vacuum pump 20 to the vacuum chamber 8 for evacuating said vacuum chamber 8. The vacuum pump 20 is thus able to suck the gases from the vacuum chamber 8.

When the ventilating step 106 is not carried out, the steps 105 and 107 of closing and opening the vacuum valve 19 are not compulsory and thus could be skipped.

The vacuum valve 19 is opened for a predetermined time, for instance about 20s, until the vacuum chamber pressure reaches a required pressure for nebulization, for instance about 0,4mbar.

The required pressure for nebulization depends on the material to nebulize. More generally, the pressure of the interior space of the vacuum chamber 8 is for instance comprised between 100mbar and 0.01 mbar or less, preferably comprised between 10mbar and 0.05mbar, and more preferably comprised between 1 mbar and 0.1mbar.

The control unit 2 is configured to control the pressure in the vacuum chamber 8 by taking measurements with the pressure sensor 17.

The container 50 containing the 2mL of the 1% liquid solution of DSX in HFE7100 solvent is next connected to the conduit 47 at step 108.

The container 50, through use of gravity and/or of a connector member, is configured to be connected with the conduit 47 so that the latter is directly in contact with the liquid composition (in other words so that the conduit is immersed into the liquid in the container 50), without connecting it to the gas. This means that one has to pass at least part of the liquid into the conduit 47 before some gas may pass into the conduit 47.

At this stage of the recoat treatment, the control unit 2 optionally closes the vacuum valve 19 at step 109.

At step 110, the spraying valve 41 is opened in order to allow a fluidic communication between the container 50 and the nebulizer 40.

At step 111, the nebulizer 40 is set for a predetermined time of spraying valve opening in order to carry out the vacuum nebulization treatment (or vacuum spraying treatment) for recoating the spectacle lenses 28.

The liquid composition is thus expulsed from the container 50 into the vacuum chamber 8 through the nozzle heads 44 of the nebulizer 40.

The vacuum pump 20 is thus able to suck or not to suck the gases from the vacuum chamber 8 during the nebulization treatment.

It is the difference in pressure, between the container 50, which initially has an internal pressure close to atmospheric pressure, and the vacuum chamber 8, which drives the liquid composition to be expulsed by the expanding propeller gas at a speed which allows an atomization of the liquid composition to create a mist of aerosol droplets directed towards the lenses 28 according to a predetermined conical or pseudo-conical direction.

This means that steps 110 and 111 which are here illustrated as two distinct steps form in reality a unique step relating to the nebulization treatment. Indeed, it is the opening of the spraying valve 110 that starts said nebulization treatment.

It will be noted that the pressure in the container is preferably smaller or close to atmospheric pressure. By smaller or close to atmospheric pressure, one means the pressure is comprised between 1bar and 500mbar included, preferably between 1 bar and 800mbar, preferably between 1 bar and 950mbar. As the container 50 may have been made at a time and place with an atmospheric pressure slightly different than the atmpospheric pressure of the time and place the machine 1 is used, one considers that the pressure inside the container 50 can be as high as 1.1bar. It might even be much higher that atmospheric pressure in case the local atmospheric pressure is low, such as 0.9bar, eg in altitude or during low pressure weather.

Indeed, when the spraying valve 41 between the vacuum chamber 8 and the container 50 is opened, the propeller, here a gas, has to adjust to a difference of pressure with a ratio of 2500 (1bar divided by 0.4mbar). This means that, roughly, notwithstanding any drop in temperature, the gas wants to expand by a factor of 2500.

Thus, in order to expand into the vacuum chamber 8, the gas has to expell first the liquid composition into the conduit 47 and then into the vacuum chamber 8.

As the change in pressure is steep, the speed of the expulsion of the liquid composition is great, and the liquid composition reaches inside the conduit 47 a speed sufficient to nebulize it at the time it quits the conduit 47 through the nozzle heads 44.

The nozzle heads 44 are here distributed by Spraying system Co. under reference "veejet H-U 1/4inch 50/10".

Each nozzle head 44 is positioned at a predetermined distance from the spectacle lenses 28, here about 4,5cm.

The spraying valve 41 is then closed at step 112 in order to disconnect (a flow interruption) the container 50 from the vacuum chamber 8 (or the nebulizer 40).

During the nebulization treatment, the anti-soiling coating composition is thus nebulized in the vacuum chamber 8 and the mist of aerosol droplets is deposited on the surfaces of the spectacle lenses 28 present in front of the nozzle heads 44 in the form of a wet coating comprising the anti-soiling compound in solvent.

It will be noted that, during the vacuum nebulization treatment, the gas inlet valve 13 can stay closed and the vacuum valve 19 can be closed to have a pressure in the vacuum chamber 8 untroubled by sucking from the vacuum pump 20. In variant, during the vacuum nebulization treatment, the gas inlet valve 13 and/or the vacuum valve 19 might stay open to have a pressure in the vacuum chamber 8 regulated by the combined working of the sucking from the vacuum pump and the gas inlet valve 13. As mentioned above, the machine 1 might be configured so that the vacuum pump does not suck gas from the chamber during the vacuum nebulization treatment.

Next, a drying and venting step 113 is carried out equilibrating the chamber pressure with atmospheric pressure and evaporating the solvent that contains the liquid composition deposited on the lenses 28.

The gas inlet valve 33 and the vacuum valve 19 are opened for a predetermined time, for instance 60s, in order to dry the lenses 28 and vent the vacuum chamber 8 and the gas inlet valve 13 and the vacuum valve 19 are then closed.

It will be noted that the drying step corresponds to an evaporation step (insomuch as drying is understood for all solvents and not only water). The opening of the gas inlet valve 33 creates a target pressure. The target pressure and the pumping rate of the vacuum pump 20 will be chosen depending on the solvent that needs to be evaporated and especially depending on the vapour pressure of the solvent at the temperature of the vacuum chamber 8 after the vacuum nebulization treatment. The pumping rate and target pressure might be determined so that the evaporation of the solvent is not so quick that it would carry compounds deposited on the lenses 28 or that it would create turbulences or strains on the liquid composition deposited.

The recoat treatment is thus finished.

The anti-soiling coating composition has been consumed and at step 114, the container 50 is disconnected from the conduit 47.

The optician opens the door 9 of the vacuum chamber 8.

There are no environmental or health risks because all the toxic gases have been filtered and the air during the treatment has been exhausted.

Here, 2mL of 1% liquid solution of DSX in HFE7100 solvent is enough to recoat at least one surface of each of the two spectacle lenses by vacuum nebulization treatment. In a variant, such volume might be enough to recoat up to four surfaces. In the case of DSX, the topcoat mostly needs a monolayer of compounds to produce its effects. Thus 2ml of this solution are enough to cover at least four surfaces of lenses, such as recoating simultaneously both surfaces of two lenses mounted on one pair of spectacles.

At step 115 the optician unloads the spectacle lenses 28 which are recoated with a new anti-soiling coating.

The optician may have to wipe the spectacle lenses 28 with a cloth to remove excess anti-soiling material or to wash them with a cleaning solution, such as IPA ("isopropyl alcohol or isopropanol").

It will be noted that the performances of the recoating are here measured with a contact angle obtained after the nebulization treatment.

The contact angle measured is here equal to about 112° which is the contact angle expected for DSX coated lenses.

The contact angle may be measured using for instance a goniometer from Kruss after applying 3 to 5 drops of water with a unit volume of 4µl onto the lenses previously washed.

It may be that the wearer wishes to add an anti-soiling coating or an anti-fogging coating on the lenses of his spectacle lenses, or that he wishes to replace the initial anti-fogging coating by an anti-soiling coating, and that the optician doesn't know either the composition of the anti-reflective coating or if there is even an anti-reflective coating on the lenses.

There is a risk relative to the adhesion of the new topcoat on the anti-reflective coating or on the lens without anti-reflective coating.

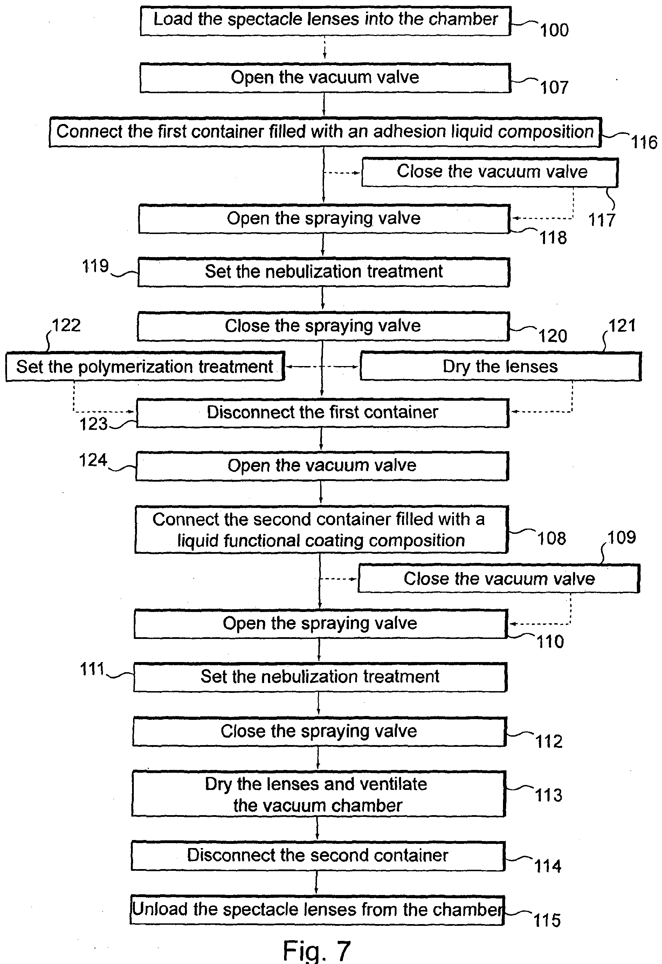

We will now describe in details the method for using the machine 1 in order to first deposit an universal adhesion layer on the spectacle lenses 28 and next recoat the spectacle lenses 28 with a new anti-soiling coating composition, in reference to Figure 7.

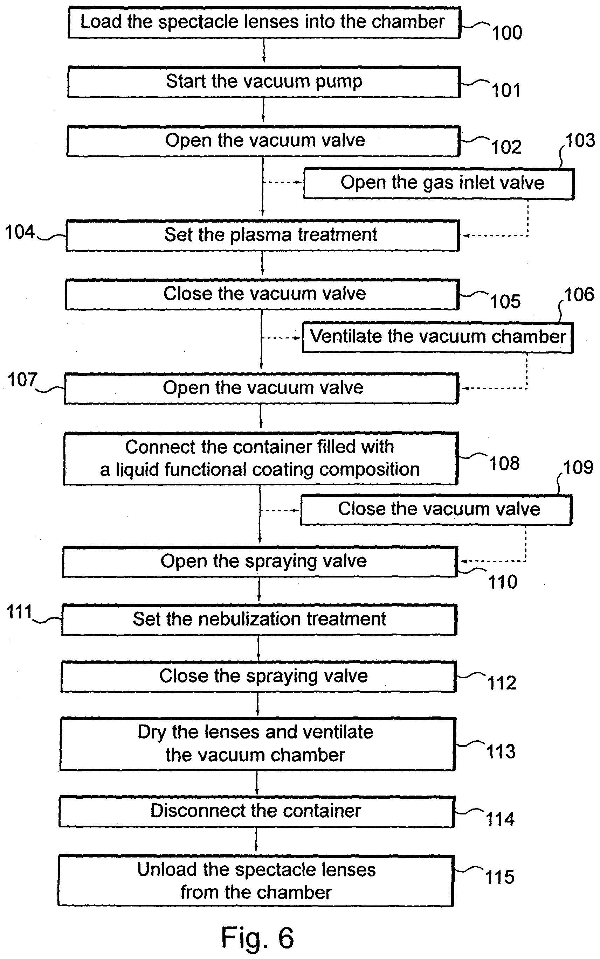

The method of Figure 7 comprises the steps 100 to 107 which are similar to the steps 100 to 107 illustrated in Figure 6. These steps 100 to 107 will not be further described in details.

The optician takes the spectacle lenses 28 (step of selecting the optical article) and selects an adapted adhesion liquid composition to coat and the adapted anti-soiling composition to recoat. Alternatively, the control unit may select the adapted adhesion liquid composition depending on input given by the optician.

The adhesion liquid composition comprises monomers that may polymerize into a polymeric coating.

Here, the adhesion liquid composition, which consists of an adhesion promoter in a solvent, is a 1% solution of 3-aminopropyl-tris(methoxy-ethoxyethoxy)silane present in water, and the anti-soiling composition is the same as mentioned above, a 1% liquid solution of DSX in HFE7100 solvent.

In variant, the adhesion liquid composition might be a 1% solution of γ-glycidoxypropyl trimethoxy-silane (GLYMO) in methanol. In such case, the adhesion liquid composition deposited may need an activation using a plasma treatment in order to activate the polymerization of the adhesion liquid composition deposited.

The optician fills a first container 50 with a determined volume, here 2mL, of the adhesion composition.

The optician opens the door 9 of the vacuum chamber 8 and at step 100 loads the spectacle lenses 28 and next closes the door 9 of the vacuum chamber 8.

The optician starts the treatment program for recoating the spectacle lenses 28 via the keyboard 7 and the graphic interface 6. The control unit 2 then takes over the recoat treatment.

The vacuum pump 20 is started at step 101 and the vacuum valve 19 is opened at step 102.

Optionally the gas inlet valve 13 is then opened at step 103.

The plasma generator 11 is then set at step 104.

The plasma treatment is not sufficient to activate the surfaces 35 and 36 of the spectacle lenses 28.

The vacuum valve 19 is then closed at step 105.

At this stage of the recoat treatment, the control unit 2 optionally implements a venting step 106 where the inlet valve 33 is opened for a predetermined time. The inlet valve 33 is then closed to end the venting step 106.

Next, the vacuum valve 19 is opened at step 107 for a predetermined time in order to evacuate said vacuum chamber 8 and until the vacuum chamber pressure reaches a required pressure for first nebulization, for instance about 0,4mbar.

The predetermined required pressure might be adapted in order to reduce the speed of the nebulized droplets in the aerosol mist so as to enable the deposition of a thicker liquid layer, if needed. Such parameter might be adapted depending on the viscosity of the adhesion liquid composition, so as to increase the quantity of adhesion promoter material to be deposited on the spectacle lenses 28.

The control unit 2 is configured to control the pressure in the vacuum chamber 8 by taking measurements with the pressure sensor 17.

The first container 50 filled with the adhesion composition is next connected to the conduit 47 at step 116.

At this stage of the recoat treatment, the control unit 2 optionally closes the vacuum valve 19 at step 117.

At step 118, the spraying valve 41 is opened in order to allow a fluidic communication between the first container 50 and the nebulizer 40.

At step 119, the nebulizer 40 is set for a predetermined time of spraying valve opening in order to carry out the first vacuum nebulization treatment (or spraying treatment) for coating the spectacle lenses 28.

The adhesion liquid composition is thus expulsed from the container 50 into the vacuum chamber 8 through the nozzle heads 44 of the nebulizer 40.

The vacuum pump 20 is able to suck or not to suck the gases from the vacuum chamber 8 during the first nebulization treatment.

It is the difference in pressure, between the container 50, which initially has an internal pressure close to atmospheric pressure, and the vacuum chamber 8, which drives the adhesion liquid composition to be expulsed by the expanding propeller gas at a speed which allows an atomization of the adhesion liquid composition to create a mist of aerosol droplets directed towards the lenses 28 according to a predetermined conical or pseudo-conical direction.

This means that steps 117 and 118 which are here illustrated as two distinct steps form in reality a unique step relating to the nebulization treatment. Indeed, it is the opening of the spraying valve 119 that starts said nebulization treatment.

It will be noted that the pressure in the container 50 is preferably smaller or close to atmospheric pressure.

The nozzle heads 44 are similar to the nozzle heads mentioned above.

Each nozzle head 44 is positioned at a predetermined distance from the spectacle lenses 28, here about 4,5cm.

The spraying valve 41 is then closed at step 120 in order to disconnect (a flow interruption) the first container 50 from the vacuum chamber 8 (or the nebulizer 40).

During the first nebulization treatment, the adhesion composition is nebulized in the vacuum chamber 8 and the mist of aerosol droplets is deposited on the surfaces of the spectacle lenses 28 present in front of the nozzle heads 44 in the form of a wet coating comprising the adhesion compound, to form a thick liquid layer at this stage.

Next, a drying step 121 can be carried out for evaporating the solvent that contains the liquid composition deposited on the lenses 28.

The gas inlet valve 33 and the vacuum valve 19 are opened for a predetermined time in order to dry the lenses 28 and the gas inlet valve 13 and the vacuum valve 19 are then closed.

Next, a polymerization treatment can be carried out at step 122, depending on the adhesion composition used.

The polymerization might not need any external source and naturally happens, due to the thinness of the deposited coating and the high surface energies involved.

In variant, the polymerization might need activation and the control unit 2 thus activates the polymerization device 37 and set with a predetermined power and for a predetermined time in order to polymerize the universal adhesion coating. Such polymerization device might be a UV lamp in case the deposited liquid comprises photo activators mixed with photo activated monomers or photopolymers, or the polymerization device might be a IR lamp or might even be the plasma generator in some cases.

It will be noted that the drying step 121 and the polymerization step 122 can be carried out in the same time, or successively.

The first nebulization treatment is thus finished.

The adhesion liquid composition has been consumed and, at step 123, the first container 50 is disconnected from the conduit 47.

Next, the vacuum valve 19 is opened at step 124 for a predetermined time in order to evacuate said vacuum chamber 8 and until the vacuum chamber pressure reaches a required pressure for second nebulization, for instance about 0,4mbar.

The control unit 2 is configured to control the pressure in the vacuum chamber 8 by taking measurements with the pressure sensor 17.

A second container 50 is filled with the 2mL of the 1% DSX in HFE7100 solvent and connected to the conduit 47.

The method of Figure 7 further comprises the steps 108 to 115 which are similar to the steps 108 to 115 illustrated in Figure 6. These steps 108 to 115 will not be further described in details.

The second container 50 is connected to the conduit 47 at step 108. At this stage of the recoat treatment, the control unit 2 optionally closes the vacuum valve 19 in step 109.

At step 110, the spraying valve 41 is opened in order to allow a fluidic communication between the second container 50 and the nebulizer 40.

At step 111, the nebulizer 40 is set for a predetermined time of valve opening in order to carry out the second vacuum nebulization treatment for recoating the spectacle lenses 28.

The liquid composition is thus expulsed from the container 50 into the vacuum chamber 8 through the nozzle heads 44 of the nebulizer 40.

Each nozzle head 44 is positioned at a predetermined distance from the spectacle lenses 28, here about 4,5cm.

It is the opening of the spraying valve 110 that starts said nebulization treatment. Thus, the steps 110 and 111 form in reality a unique step relating to the nebulization treatment.

The spraying valve 41 is then closed at step 112.

During the second nebulization treatment, the anti-soiling coating composition is nebulized in the vacuum chamber 8 and the mist of aerosol droplets is deposited on the surfaces of the spectacle lenses 28 present in front of the nozzle heads 44 in the form of a wet coating comprising the anti-soiling compound in solvent.

Next, a drying and venting step 113 is carried out equilibrating the chamber pressure with atmospheric pressure and evaporating the solvent that contains the liquid composition deposited on the lenses 28.

The gas inlet valve 33 and the vacuum valve 19 are opened for a predetermined time, for instance 60s, in order to dry the lenses 28 and vent the vacuum chamber 8 and the gas inlet valve 13 and the vacuum valve 19 are then closed.

The recoat treatment is thus finished.

The anti-soiling coating composition has been consumed and at step 114, the second container 50 is disconnected from the conduit 47.

The optician opens the door 9 of the vacuum chamber 8.

At step 115 the optician unloads the spectacle lenses 28 which are now recoated with a new anti-soiling coating. The optician may have to wipe the spectacle lenses 28 with a cloth to remove the excess of anti-soiling material, or wash it using IPA as noted above.

We will now describe in details the method for using the machine 1 according to a variant.

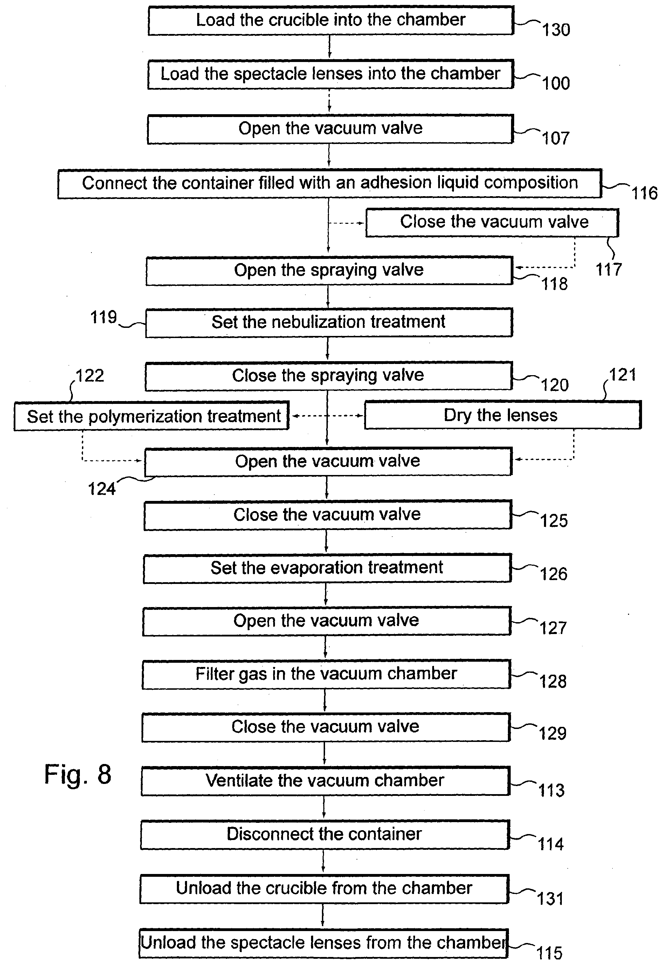

The method illustrated in Figure 8 is similar to the method illustrated in Figure 7, except that the second vacuum nebulization treatment is replaced by an evaporation treatment.

The method of Figure 8 comprises steps 100 to 107 and steps 116 to 122 which are similar to steps 100 to 107 and steps 116 to 122 illustrated in Figure 7. These steps 100 to 107 and steps 116 to 122 will not be further described in details.

The optician opens the door 9 of the vacuum chamber 8 and, respectively at step 130 and 100, loads the crucible 30 and the spectacle lenses 28 on the second support 29 and on the first support 27, respectively.

The crucible 30 has previously been imbibed with a predetermined volume of the new anti-soiling liquid coating composition (which is similar to the composition mentioned above and which forms here the second predetermined liquid coating composition).

The optician fills the container 50 with a determined volume, here 2mL, of the adhesion composition.

The optician closes the door 9 of the vacuum chamber 8 and starts the treatment program for recoating the spectacle lenses 28 via the keyboard 7 and the graphic interface 6. The control unit 2 then takes over the recoat treatment.

The vacuum pump 20 is started at step 101 and the vacuum valve 19 is opened at step 102.

Optionally the gas inlet valve 13 is then opened at step 103.

The plasma generator 11 is then set at step 104.

The plasma treatment is not sufficient to activate the surfaces 35 and 36 of the spectacle lenses 28.

The vacuum valve 19 is then closed at step 105.

At this stage of the recoat treatment, the control unit 2 optionally implements a venting step 106 where the inlet valve 33 is opened for a predetermined time. The inlet valve 33 is then closed to end the venting step 106.

Next, the vacuum valve 19 is opened at step 107 for a predetermined time in order to evacuate said vacuum chamber 8 and until the vacuum chamber pressure reaches a required pressure for nebulization, for instance about 0,4mbar.

The control unit 2 is configured to control the pressure in the vacuum chamber 8 by taking measurements with the pressure sensor 17.

The container 50 filled with the adhesion composition is next connected to the conduit 47 at step 116.

At step 118, the spraying valve 41 is opened in order to allow a fluidic communication between the container 50 and the nebulizer 40.

At this stage of the recoat treatment, the control unit 2 optionally closes the vacuum valve 19 in step 117.

At step 119, the nebulizer 40 is set for a predetermined time on the valve opening in order to carry out the vacuum nebulization treatment for coating the spectacle lenses 28.

The adhesion liquid composition is thus expulsed from the container 50 into the vacuum chamber 8 through the nozzle heads 44 of the nebulizer 40.

The nozzle heads 44 are similar to the nozzle heads mentioned above and are each positioned at a predetermined distance from the spectacle lenses 28, here about 4,5cm.

The spraying valve 41 is then closed at step 120.

During the nebulization treatment, the adhesion composition is nebulized in the vacuum chamber 8 and the mist of aerosol droplets is deposited on the surfaces of the spectacle lenses 28 present in front of the nozzle heads 44 in the form of a wet coating comprising the adhesion compound.

Next, a drying step 121 can be carried out for evaporating the solvent that contains the adhesion liquid composition deposited on the lenses 28.

The gas inlet valve 33 and the vacuum valve 19 are opened for a predetermined time in order to dry the lenses 28 and the gas inlet valve 13 and the vacuum valve 19 are then closed.

Next, a polymerization treatment can be carried out at step 122, depending on the adhesion composition used.

The polymerization treatment is natural and thus does not need any light source ; or is forced and the control unit 2 sets the polymerization device 37 with a predetermined power and for a predetermined time in order to polymerize the layer of universal adhesion coating.

The drying step 121 and the polymerization step 122 can be carried out in the same time, or successively.

The nebulization treatment is thus finished.

The adhesion liquid composition has been consumed.

Next, the vacuum valve 19 is opened at step 124 for a predetermined time in order to evacuate said vacuum chamber 8 and until the vacuum chamber pressure reaches a required pressure for nebulization, for instance about 0,4mbar.

The control unit 2 is configured to control the pressure in the vacuum chamber 8 by taking measurements with the pressure sensor 17.

The vacuum valve 19 is then closed at step 125 in order to disconnect (a flow interruption) the vacuum pump 20 from the vacuum chamber 8. The vacuum pump 20 is thus able not to suck the gases from the vacuum chamber 8.

The heating module 32 of the evaporation device 11 is then set at step 126 for a predetermined time at a predetermined current in order to reach a predetermined temperature of the heating module 32.

The predetermined time is about 30-50s and the predetermined heating temperature is about 350°C. Heat load time and temperature depend on evaporation pressure and precursor used.

The heat of the heating module 32 is at least partially transferred to the crucible 30 and thus to the anti-soiling coating liquid composition which is imbibed.

Then, the heating step is stopped and the evaporation treatment continues (step 126) for a predetermined time which is for instance equal to 60-180s.

During the evaporation treatment, the anti-soiling coating composition is evaporated in the vacuum chamber 8 and the vapour is deposited on the spectacle lenses 28.

Next, the vacuum valve 19 is opened at step 127 in order to reconnect (a flow connection) the vacuum pump 20 to the vacuum chamber 8 for evacuating said vacuum chamber 8, and in particular for evacuating the gases emitted during the vacuum evaporation treatment because such gases might be toxic. The vacuum pump 20 is thus able to suck the gases from the vacuum chamber 8.

The gases are sent from the vacuum pump 20 to the filtering device 23 where the gases are filtered at step 128.

The filtering step 128 is carried out for a predetermined time, for instance about 120s.

The vacuum valve 19 is then closed at step 129 so that the vacuum pump 20 is disconnected (a flow interruption) from the vacuum chamber 8. The vacuum pump 20 is thus able not to suck the gases from the vacuum chamber 8.

As in step 106, a venting step 113 is carried out equilibrating the chamber pressure with atmospheric pressure. The venting step 113 is identical to the venting steps 106 and 121 (there is no drying here).

The gas inlet valve 33 is opened for a predetermined time, for instance 60s, in order to vent the vacuum chamber 8 and the gas inlet valve 13 is then closed.

The recoat treatment is thus finished.

The optician opens the door 9 of the vacuum chamber 8.

There is no risk because all the toxic gases have been filtered and the air during the treatment has been exhausted.

The anti-soiling coating composition has been consumed.

At steps 114, 131 and 115 the optician respectively disconnects the container 50, unloads the crucible 30 and unloads the spectacle lenses 28 which are recoated with a new anti-soiling coating.

The crucible 30 may in fact be a disposable product.

It will be noted that the term "nebulization" in this application corresponds to a conversion of a liquid to a fine spray or an atomization. Next, the expression "mist of aerosol droplets" here means that the nebulizer is configured to transform (nebulize) the liquid coating composition into a plurality of a liquid droplets arranged in suspension under the shape of a mist.

It will further be noted that the term "vacuum chamber" means that the pressure of the interior space of the chamber is for instance comprised between 100mbar and 0.01mbar included or less at least at the start of the vacuum nebulization treatment, preferably between 10mbar and 0.05mbar included, and more preferably between 1mbar and 0.1mbar included.

It will further be noted that the term smaller or close to atmospheric pressure" means the pressure is comprised between 1bar and 500mbar included, preferably between 1 bar and 800mbar, and more preferably between 1 bar and 950mbar. As the container may have been made at a time and place with an atmospheric pressure slightly different than the atmpospheric pressure of the time and place the machine is used, one considers that the pressure inside the container be as high as 1.1bar. It might even be much higher that atmospheric pressure in case the local atmospheric pressure is low, such as 0.9bar, eg in altitude or during low pressure weather.

It will be noted that the deposited coating might be a predetermined liquid coating composition that can be evaporated and used according to any of the embodiments illustrated in Figures 6 to 8, or the deposited coating might be a predetermined liquid coating composition that cannot be evaporated nor deposited by chemical vapour deposition and thus used only in the embodiment illustrated in Figures 6 and 7.

The deposited coating might be a polymeric layer that can be deposited in order to improve the deposition performances of a further topcoat layer. In particular when one desires to deposit such topcoat on top of a lens surface of unknown origin, one may need the deposition of an universal adhesion layer comprising an adhesion promoter.

It will be noted that the adhesion promoter present in the adhesion liquid composition can be one of 3-amino-propyltrimethoxysilane (APTMS), 3-aminopropyltriethoxysilane (APTES), 3-aminopropyl-tris(methoxyethoxy-ethoxy) silane, acetamido propyltrimethoxysilane, γ-glycidoxypropyl trimethoxy-silane (GLYMO), γ-glycidoxypropyltriethoxysilane, and mixtures thereof, or other compounds of same properties

The deposited coating may be a complex hybrid compound, comprising for instance metallic or mineral particles or nanoparticles. It might comprise a mix of chemical compounds with some having different boiling points than others or even having either no boiling point, such as materials that only degrades with heat, or very high boiling points, typically higher than 500°C or 1000°C. It might comprise monomers or mix of monomers in order to form polymeric materials. It might even comprise active compounds such as dyes, photochromic dyes, electrochromic materials, liquid crystals, photo-activators, ionic salts, etc.

The predetermined liquid coating compositions to be deposited may be any sprayable liquid solution. It is useful to provide the needed compound in a solvent to render the compound sprayable. The solvent is for instance water, or ethanol, or methanol, or HFE7100, or IPA, or acetone or other solvents.

The predetermined liquid coating composition has a concentration of compound into the solvent which might vary from 0.01% up till 100%. Preferably the total concentration of compounds in the solvent might be comprised between 0.1% and 10%, and more preferably between 0.5% and 5% included.

The predetermined liquid coating composition has a concentration of compound vs. solvent which depend on the viscosity of solvent and chemical compounds.

The viscosity of the predetermined liquid coating composition to be sprayed might depend on the solvent used if any. One objective of the use of solvent is to enable the solution to have a viscosity low enough so that it may attain a speed at which it is nebulized when propelled out of the nozzle due to the difference in pressure between the initial pressure inside the container and the pressure inside the vacuum chamber right before the opening of the spraying valve.

The necessary determined volume of predetermined liquid coating composition may vary depending on the final thickness of material needed, the concentration of compounds in the solution and the amount of the nebulized liquid which is sprayed outside of the surface to be treated.

The nebulizer can comprise multiple inlets for driving nebulized aerosol droplets into the chamber, providing multiple outputs into the chamber.

The container may be connected to a conduit that separates in two or four tubes in order to provide two or four outputs able to provide projection cones. The separation may be before the nozzle system device and in such case, there are multiple inlets and outlets penetrating the chamber. In a variant, the separation may be placed inside the chamber and, in that case, there may be only one inlet in the nebulizer. The multiple outlets may be organized to be able to each face one surface of the optical article. In case of spectacle glasses, comprising two lenses, there can be four outlets in order to have a projection of the aerosol droplets directed to each of the two surfaces of the two lenses.

In all the cases it is interesting that the conduit connecting the container and the vacuum chamber has an opening immersed in the liquid composition into the container, so that the expansion of the air push the liquid first into the tubing toward the inlet, and not the air, or other gas or propeller first. The container and conduit might be arranged so that gravity pulls the liquid to the opening of the conduit. In a variant, the machine might comprise a moveable extension inked to the conduit or inherent to the container, the extension being configured to plunge toward a position where the liquid is pulled by gravity.

The nozzles system might be able to move into position and/or the chamber might comprise means to move the holder of the optical article to position it in front of the different nozzle heads.

The distance between the nozzle heads and the surfaces of the optical article might be comprised between about 1cm and about 10cm, preferably between about 2cm and about 8cm, and more preferably between about 4cm and about 6cm.

The nozzle system may reduce the solid angle of the sprayed aerosol cone, but it may also shape it into a pseudo-cone with a non-circular cross-section.

Further, the nozzle may control or adapt the diameter of the projection, impacting the outgoing speed and dispersion of the nebulized coating.

The nozzle system can be used to deposit films on the surface of multiple optical articles, the amount of solution, the concentration of compound, the width of the pseudo-cone and the distance to the nozzle head(s) may be adapted with different values.,

The nozzle system can be used to deposit as little material out of the surface of the optical article to be covered as possible.

One may be able to adapt the shape of the nozzle, the distance of projection, the exact vacuum pressure, the relative position and orientation of the projection pseudo-cone with the surface to be covered depending on the liquid layer deposited (compound and solvent), the material of the surface to be covered, the geometry, both shape and curvature, of the surface to be covered and the formulation, the surface tension and the viscosity of the sprayable liquid, and the initial pressure inside the container.

By adjusting the exact vacuum pressure and the initial pressure inside the container, one may manipulate the force imposed on the liquid to expel it from the container.

By adjusting the shape of the nozzle, the distance and orientation of the pseudo-cone, one may manipulated the shape and the local density of the cone or pseudo-cone at the moment the droplets impacts the surface to be covered.

Both aspects may enable to manipulate the speed of the nebulized droplets.

All those parameters may be manipulated in order either to adapt the liquid to the available machine or conversely adapt the machine to the solution available.

The solution might be placed in a rigid container or a deformable container, such as a rubber or plastics.

In a variant, the vacuum valve is not used to cause the vacuum pump to suck or not to suck gases from the vacuum chamber, but rather the control unit is configured to directly put on and put off the vacuum pump (flow connection and flow interruption).

In variants that are not illustrated, the machine does not comprise the plasma generator but comprises the nebulizer and optionally the evaporation device and/or the polymerization device and:
- the control unit of the machine is configured to control the nebulizer for depositing an adhesion coating and/or a topcoat to the optical article without plasma treatment beforehand;
- the control unit of the machine is further configured to control the polymerization device to polymerize the nebulized adhesion coating;
- the control unit of the machine is further configured to control the evaporation device for depositing a topcoat on the optical article.

In further variants that are not illustrated:
- the drying step further comprises the heating of the vacuum chamber, for example to bring it close to ambient temperature or higher;
- the container may be under slight pressure (over atmospheric pressure) and/or contain a traditional carrier however, due to the machine proposed, less carrier is needed;
- the container may be under pressure smaller than atmospheric pressure. Thus, if the container is breached, air is sucked in at first instead of letting material out;
- the first support and/or the nozzle heads are moveable and configured to select the distance between the optical article and the nozzle heads; the selection of the distance may depend on the formulation of the sprayed liquid coating composition and the geometry of both the optical article and the surface to be covered;
- the nebulizer is not disposed on the door of the vacuum chamber, but rather is directly connected to the vacuum chamber through a wall of the chamber. For instance, the third inlet port is formed on the exterior surface of a wall of the vacuum chamber whereas the third outlet port is formed on the interior face of this wall;
- the first and second supports are not disposed on the door of the vacuum chamber, but rather directly in the vacuum chamber and the evaporation device, in particular the heating module, is thus not disposed on the door but also in the vacuum chamber;
- the filtering device is not disposed after the vacuum pump, but rather between the vacuum pump and the vacuum chamber;
- the crucible is not formed as a porous member which is imbibed with the new anti-soiling coating liquid composition, but rather as a receptacle into which the new anti-soiling coating liquid composition is poured;
- the crucible is not loaded at the same time as the spectacle lenses (before the vacuum plasma treatment), but rather after the plasma treatment and before the evaporation treatment;
- the pressure sensor is not connected to the outlet circuit via a branching point, but rather the pressure sensor is directly connected to the vacuum chamber; and/or
- the values of pressure, temperature and time are different, for instance the plasma treatment pressure is about 0.1-1mbar rather than 0.3-0.35mbar, the evaporation treatment pressure is about 1-1000mbar rather than 50mbar and the heating temperature is about 200-500°C rather than 350°C.

## Claims

1. Machine for coating an optical article (28) with a predetermined coating composition, comprising:
- a vacuum chamber (8) having an interior space (31) configured to receive said optical article (28);
- a vacuum pump (20) connected to said vacuum chamber (8);
- a nebulizer (40) configured to carry out a vacuum nebulization treatment of said predetermined coating composition for depositing it on said optical article (28) in said vacuum chamber (8);
- a plasma generator (11) configured to carry out a vacuum plasma treatment of said optical article (28) in said vacuum chamber (8);
- a control unit (2) configured to control said vacuum pump (20);
said optical article (28) being an ophtalmic lens;
said control unit (2) being configured to control said plasma generator (11) for removing an initial outermost coating of said optical article (28), or for activating a surface of the optical article, and to cause said vacuum pump (20) to suck gases from said vacuum chamber (8) during vacuum plasma treatment;
said control unit (2) being further configured to cause the vacuum pump (20) to suck gases from said vacuum chamber (8) to bring said vacuum chamber (8) to a predetermined required pressure for said vacuum nebulization treatment; and
said control unit (2) and said nebulizer (40) being further configured to nebulize said predetermined coating composition which is liquid into a mist of aerosol droplets and to direct said droplets towards at least a surface (35, 36) of said optical article (28).

2. Machine according to claim 1, wherein said control unit (2) is configured to control said nebulizer (40) for coating said optical article (28) with said predetermined coating composition;

3. Machine according to one of claims 1 to 2, wherein said predetermined liquid coating composition forms a topcoat on said optical article (28) after said vacuum nebulization treatment, which topcoat is configured to bring a predetermined function to said optical article (28), such as anti-soiling or anti-fogging.

4. Machine according to one of claims 1 to 2, wherein said predetermined liquid coating composition comprises monomers that may polymerize into a polymeric coating on said optical article (28) after said vacuum nebulization treatment, such as an universal adhesion coating which is configured to receive a predetermined topcoat.

5. Machine according to claim 4, wherein, after said vacuum nebulization treatment to form said polymeric coating, said control unit (2) and said nebulizer (40) are further configured to carry out another vacuum nebulization treatment in said vacuum chamber (8) by nebulizing another predetermined coating composition which is liquid into a mist of aerosol droplets, said droplets being directed towards at least said surface (35, 36) of said optical article (28) to form a topcoat configured to bring a predetermined function to said optical article (28), such as anti-soiling or anti-fogging, and said control unit (2) is further configured to cause said vacuum pump (20) to suck gases from said vacuum chamber (8) between said two vacuum nebulization treatments to bring said vacuum chamber (8) to another predetermined required pressure for said another vacuum nebulization treatment.

6. Machine according to one of claims 4 and 5, further comprising an evaporation device (10) configured to carry out a vacuum evaporation treatment of an anti-soiling or anti-fogging coating composition for depositing it on said polymeric coating deposited by nebulization on said optical article (28) in said vacuum chamber (8), said control unit (2) being configured to control said evaporation device (10) for recoating said optical article (28) with said anti-soiling or anti-fogging coating composition and being configured to cause said vacuum pump (20) not to suck gases from said vacuum chamber (8) during vacuum evaporation treatment.

7. Machine according to any one of claims 1 to 6, wherein said nebulizer (40) comprises a nozzle system (43) and said machine (1) further comprises a container (50) which contains a determined volume of said predetermined coating composition and at least one conduit (47) configured to connect said container (50) to said vacuum chamber (8) in order to allow a fluidic communication between said container (50) and said nebulizer (40).

8. Machine according to claim 7, wherein said nozzle system (43) comprises at least one nozzle head (44) disposed in said vacuum chamber (8) and said machine (1) further comprises at least one inlet port (42) and at least one outlet port (45) in communication with said at least one inlet port (42), said at least one conduit (47) being in fluidic communication with said at least one inlet port (42) and said at least one nozzle head (44) being in fluidic communication with at least one outlet port (45).

9. Machine according to one of claims 7 and 8, wherein said nozzle system (43) is configured to direct said droplets towards at least a surface (35, 36) of said optical article (28) according to a conical or pseudo-conical projection defined by a predetermined solid angle.

10. Machine according to any one of claims 7 to 9, further comprising a support (27) on which said optical article (28) is configured to be received, said support (27) and said nozzle system (43) being configured to place said optical article (28) at a predetermined distance from said nozzle system (43).

11. Machine according to any one of claims 7 to 10, wherein said container (50) is configured for propelling said determined volume of said predetermined coating composition in said at least one conduit (47) until said nozzle system (43) where said predetermined coating composition is nebulized into said mist of aerosol droplets in said vacuum chamber (8).

12. Machine according to claim 11, wherein said container (50) comprises a gaseous propeller for propelling said determined volume of said predetermined coating composition in said at least one conduit (47) and towards said nozzle system (43).

13. Machine according to any one of claims 7 to 12, wherein said container (50) comprises an internal space (51) containing said determined volume of said predetermined coating composition, said internal space (51) having an internal pressure which is equal or close to atmospheric pressure.

14. Machine according to any one of claims 1 to 13, wherein said predetermined coating composition is polymerizable, said machine (1) further comprises a polymerization device and said control unit (2) is further configured to control said polymerization device to polymerize said predetermined coating composition after said vacuum nebulization treatment.

15. Machine according to claim 14, wherein said polymerization device is formed by at least one activation light source or by a plasma generator (11).

16. Machine according to any one of claims 1 to 15, wherein said predetermined coating composition contains solvent and said control unit (2) is configured to cause the vacuum pump (20) to suck gases from said vacuum chamber (8) after said vacuum nebulization treatment for drying said optical article (28) and evaporating said solvent.

17. Machine according to any one of claims 1 to 16, wherein said predetermined required pressure for said vacuum nebulization treatment is comprised between 100mbar and 0.01 mbar or less, preferably between 10mbar and 0.05mbar, and more preferably between 1mbar and 0.1mbar, in said vacuum chamber (8) at the start of said vacuum nebulization treatment.

18. Method for using the machine (1) according to any one of claims 1 to 17, comprising the steps of:
- selecting an optical article (28) formed by an ophtalmic lens, having an initial base coating;
- loading (100) said optical article (28) into an internal space (31) of a vacuum chamber (8) of said machine (1);
- carrying out a vacuum plasma treatment with a plasma generator (11) of said machine (1) and controlling it for removing an initial outermost coating of said optical article (28), or for activating a surface of the optical article;
- causing (102) the vacuum pump (20) to suck gases from said vacuum chamber (8) during said vacuum plasma treatment;
- connecting (108, 116) a container (50) containing a determined volume of a predetermined liquid coating composition to a nebulizer (40) of said machine (1) in order to allow a fluidic communication between said container (50) and said vacuum chamber (8) ;
- causing (107, 124) the vacuum pump (20) of said machine (1) to suck gases from said vacuum chamber (8) to bring said vacuum chamber (8) to a predetermined required pressure for a vacuum nebulization treatment; and
- carrying out (110, 111, 118, 119) said vacuum nebulization treatment and controlling it for nebulizing said predetermined coating composition which is liquid into a mist of aerosol droplets and to direct said droplets towards at least a surface (35, 36) of said optical article (28) to form a coating;
- unloading (115) the optical article (28) from the vacuum chamber (8).

19. Method according to claim 18, wherein said predetermined liquid coating composition forms a topcoat on said optical article (28) after said vacuum nebulization treatment, which topcoat is configured to bring a predetermined function to said optical article (28), such as anti-soiling or anti-fogging.

20. Method according to claim 18, wherein said predetermined liquid coating composition comprises monomers that may polymerize into a polymeric coating on said optical article (28) after said vacuum nebulization treatment, such as an universal adhesion coating, and said method further comprises, after said step of carrying out said vacuum nebulization treatment to form said polymeric coating, the steps of:
- causing (124) said vacuum pump (20) to suck gases from said vacuum chamber (8) to bring said vacuum chamber (8) to another predetermined required pressure for another vacuum nebulization treatment;
- carrying out (111) said another vacuum nebulization treatment in said vacuum chamber (8) and controlling it for nebulizing another predetermined coating composition which is liquid into a mist of aerosol droplets, said droplets being directed towards at least said surface (35,36) of said optical article (28) to form a topcoat configured to bring a predetermined function to said optical article (28), such as anti-soiling or anti-fogging.

21. Method according to claim 18, wherein said predetermined liquid coating composition comprises monomers that may polymerize into a polymeric coating on said optical article (28) after said vacuum nebulization treatment, such as an universal adhesion coating, and said method further comprises, after said step of carrying out said vacuum nebulization treatment to form said polymeric coating, the steps of:
- causing (127) the vacuum pump (20) not to suck gases from the vacuum chamber (8);
- carrying out (126) a vacuum evaporation treatment with an evaporation device (10) of said machine (1) and controlling it for recoating said optical article (28) with an anti-soiling or anti-fogging coating composition.

22. Method according to any one of claims 18 to 21, wherein said predetermined liquid coating composition contains solvent and said method further comprises, after said step of carrying out said vacuum nebulization treatment to form a coating, the step of drying (113, 121) said optical article (28) by causing the vacuum pump (20) to suck gases from said vacuum chamber (8) in order to evaporate said solvent.

## Patentansprüche

1. Maschine zum Beschichten eines optischen Artikels (28) mit einer vorbestimmten Beschichtungszusammensetzung, aufweisend:
- eine Vakuumkammer (8) mit einem Innenraum (31), der konfiguriert ist, den optischen Artikel (28) aufzunehmen;
- eine Vakuumpumpe (20), die mit der Vakuumkammer (8) verbunden ist;
- einen Vernebler (40), der konfiguriert ist, eine Vakuumvernebelungsbehandlung der vorbestimmten Beschichtungszusammensetzung auszuführen, um sie auf dem optischen Artikel (28) in der Vakuumkammer (8) abzuscheiden;
- einen Plasmaerzeuger (11), der konfiguriert ist, eine Vakuumplasmabehandlung des optischen Artikels (28) in der Vakuumkammer (8) auszuführen;
- eine Steuereinheit (2), die konfiguriert ist, die Vakuumpumpe (20) zu steuern;
wobei der optische Artikel (28) eine ophtalmische Linse ist;
die Steuereinheit (2) konfiguriert ist, den Plasmaerzeuger (11) zu steuern, um eine anfängliche äußerste Beschichtung des optischen Artikels (28) zu entfernen oder um eine Fläche des optischen Artikels zu aktivieren, und zu bewirken, dass die Vakuumpumpe (20) während der Vakuumplasmabehandlung Gase aus der Vakuumkammer (8) saugt;
die Steuereinheit (2) ferner konfiguriert ist, zu bewirken, dass die Vakuumpumpe (20) Gase aus der Vakuumkammer (8) saugt, um die Vakuumkammer (8) auf einen vorbestimmten erforderlichen Druck für die Vakuumvernebelungsbehandlung zu bringen; und
die Steuereinheit (2) und der Vernebler (40) ferner konfiguriert sind, die vorbestimmte Beschichtungszusammensetzung, die flüssig ist, in einen Nebel von Aerosoltröpfchen zu zerstäuben und die Tröpfchen auf mindestens eine Fläche (35, 36) des optischen Artikels (28) zu lenken.

2. Maschine nach Anspruch 1, wobei die Steuereinheit (2) konfiguriert ist, den Vernebler (40) zum Beschichten des optischen Artikels (28) mit der vorbestimmten Beschichtungszusammensetzung zu steuern;

3. Maschine nach einem der Ansprüche 1 bis 2, wobei die vorbestimmte flüssige Beschichtungszusammensetzung nach der Vakuumvernebelungsbehandlung eine Deckschicht auf dem optischen Artikel (28) bildet und die Deckschicht konfiguriert ist, dem optischen Artikel (28) eine vorbestimmte Funktion wie schmutzabweisend oder beschlagabweisend zu verleihen.

4. Maschine nach einem der Ansprüche 1 bis 2, wobei die vorbestimmte flüssige Beschichtungszusammensetzung Monomere aufweist, die nach der Vakuumvernebelungsbehandlung auf dem optischen Artikel (28) in eine polymere Beschichtung polimerisieren können, wie beispielsweise eine universelle Adhäsionsbeschichtung, die konfiguriert ist, eine vorbestimmte Deckschicht aufzunehmen.

5. Maschine nach Anspruch 4, wobei, nach der Vakuumvernebelungsbehandlung zum Bilden der polymeren Beschichtung die Steuereinheit (2) und der Vernebler (40) ferner konfiguriert sind, eine weitere Vakuumvernebelungsbehandlung in der Vakuumkammer (8) durch Zerstäuben einer weiteren vorbestimmten Beschichtungszusammensetzung, die flüssig ist, in einen Nebel von Aerosoltröpfchen auszuführen, wobei die Tröpfchen in Richtung auf mindestens die Fläche (35, 36) des optischen Artikels (28) gelenkt werden, um eine Deckschicht zu bilden, die konfiguriert ist, dem optischen Artikel (28) eine vorbestimmte Funktion wie schmutzabweisend oder beschlagabweisend zu verleihen, und die Steuereinheit (2) ferner konfiguriert ist, zu bewirken, dass die Vakuumpumpe (20) zwischen den zwei Vakuumvernebelungsbehandlungen Gase aus der Vakuumkammer (8) saugt, um die Vakuumkammer (8) auf einen anderen vorbestimmten erforderlichen Druck für eine weitere Vakuumvernebelungsbehandlung zu bringen.

6. Maschine nach einem der Ansprüche 4 und 5, ferner aufweisend eine Verdampfungsvorrichtung (10), die konfiguriert ist, eine Vakuumverdampfungsbehandlung einer schmutzabweisenden oder beschlagabweisenden Beschichtungszusammensetzung zum Abscheiden auf der polymeren Beschichtung, die durch Vernebelung auf dem optischen Artikel (28) in der Vakuumkammer (8) abgeschieden wird, auszuführen, wobei die Steuereinheit (2) konfiguriert ist, die Verdampfungsvorrichtung (10) zu steuern, um den optischen Artikel (28) mit der schmutzabweisenden oder beschlagabweisenden Beschichtungszusammensetzung neu zu beschichten, und die konfiguriert ist, zu bewirken, dass die Vakuumpumpe (20) während der Vakuumverdampfungsbehandlung keine Gase aus der Vakuumkammer (8) saugt.

7. Maschine nach einem der Ansprüche 1 bis 6, wobei der Vernebler (40) ein Düsensystem (43) aufweist und die Maschine (1) ferner einen Behälter (50) aufweist, der ein bestimmtes Volumen der vorbestimmten Beschichtungszusammensetzung enthält, und mindestens eine Leitung (47), die konfiguriert ist, den Behälter (50) mit der Vakuumkammer (8) zu verbinden, um eine Fluidverbindung zwischen dem Behälter (50) und dem Vernebler (40) zu ermöglichen.

8. Maschine nach Anspruch 7, wobei das Düsensystem (43) mindestens einen Düsenkopf (44) aufweist, der in der Vakuumkammer (8) angeordnet ist, und die Maschine (1) ferner mindestens eine Einlassöffnung (42) und mindestens eine Auslassöffnung (45) in Kommunikation mit der mindestens einen Einlassöffnung (42) aufweist, wobei die mindestens eine Leitung (47) in Fluidverbindung mit der mindestens einen Einlassöffnung (42) ist und der mindestens eine Düsenkopf (44) in Fluidverbindung mit mindestens einer Auslassöffnung (45) ist.

9. Maschine nach einem der Ansprüche 7 und 8, wobei das Düsensystem (43) konfiguriert ist, die Tröpfchen auf mindestens eine Fläche (35, 36) des optischen Artikels (28) gemäß einer durch einen vorbestimmten Raumwinkel definierte Kegel- oder Pseudokegelprojektion zu lenken.

10. Maschine nach einem der Ansprüche 7 bis 9, ferner aufweisend eine Auflage (27), auf welcher der optische Artikel (28) konfiguriert ist, aufgenommen zu werden, wobei die Auflage (27) und das Düsensystem (43) konfiguriert sind, den optischen Artikel (28) in einem vorbestimmten Abstand vom Düsensystem (43) anzuordnen.

11. Maschine nach einem der Ansprüche 7 bis 10, wobei der Behälter (50) konfiguriert ist, das bestimmte Volumen der vorbestimmten Beschichtungszusammensetzung in der mindestens einen Leitung (47) bis zu dem Düsensystem (43), in dem die vorbestimmte Beschichtungszusammensetzung in den Nebel von Aerosoltröpfchen in der Vakuumkammer (8) zerstäubt wird, vorwärtszutreiben.

12. Maschine nach Anspruch 11, wobei der Behälter (50) einen gasförmigen Propeller aufweist, um das bestimmte Volumen der vorbestimmten Beschichtungszusammensetzung in der mindestens einen Leitung (47) und zum Düsensystem (43) vorwärtszutreiben.

13. Maschine nach einem der Ansprüche 7 bis 12, wobei der Behälter (50) einen Innenraum (51) aufweist, der das bestimmte Volumen der vorbestimmten Beschichtungszusammensetzung enthält, wobei der Innenraum (51) einen Innendruck aufweist, der gleich oder nahe dem Atmosphärendruck ist.

14. Maschine nach einem der Ansprüche 1 bis 13, wobei die vorbestimmte Beschichtungszusammensetzung polymerisierbar ist und die Maschine (1) ferner eine Polymerisationsvorrichtung aufweist und die Steuereinheit (2) ferner konfiguriert ist, die Polymerisationsvorrichtung zu steuern, um die vorbestimmte Beschichtungszusammensetzung nach der Vakuumvernebelungsbehandlung zu polymerisieren.

15. Maschine nach Anspruch 14, wobei die Polymerisationsvorrichtung durch mindestens eine Aktivierungslichtquelle oder durch einen Plasmaerzeuger (11) gebildet ist.

16. Maschine nach einem der Ansprüche 1 bis 15, wobei die vorbestimmte Beschichtungszusammensetzung Lösemittel enthält und die Steuereinheit (2) konfiguriert ist, zu bewirken, dass die Vakuumpumpe (20) nach der Vakuumvernebelungsbehandlung Gase aus der Vakuumkammer (8) saugt, um den optischen Artikel (28) zu trocknen und das Lösemittel zu verdampfen.

17. Maschine nach einem der Ansprüche 1 bis 16, wobei der vorbestimmte erforderliche Druck für die Vakuumvernebelungsbehandlung zwischen 100 mbar und 0,01 mbar oder weniger, bevorzugt zwischen 10 mbar und 0,05 mbar und mehr bevorzugt zwischen 1 mbar und 0,1 mbar in der Vakuumkammer (8) zu Beginn der Vakuumvernebelungsbehandlung liegt.

18. Verfahren zur Verwendung der Maschine (1) nach einem der Ansprüche 1 bis 17, das die Schritte aufweist:
- Auswählen eines optischen Artikels (28), der durch eine ophtalmische Linse gebildet ist, die eine anfängliche Grundbeschichtung aufweist;
- Laden (100) des optischen Artikels (28) in einen Innenraum (31) einer Vakuumkammer (8) der Maschine (1);
- Ausführen einer Vakuumplasmabehandlung mit einem Plasmaerzeuger (11) der Maschine (1) und Steuern davon, um eine anfängliche äußerste Beschichtung des optischen Artikels (28) zu entfernen oder um eine Fläche des optischen Artikels zu aktivieren;
- Bewirken (102), dass die Vakuumpumpe (20) während der Vakuumplasmabehandlung Gase aus der Vakuumkammer (8) saugt;
- Verbinden (108, 116) eines Behälters (50), der ein bestimmtes Volumen einer vorbestimmten flüssigen Beschichtungszusammensetzung enthält, mit einem Vernebler (40) der Maschine (1), um eine Fluidverbindung zwischen dem Behälter (50) und der Vakuumkammer (8) zu ermöglichen;
- Bewirken (107, 124), dass die Vakuumpumpe (20) der Maschine (1), Gase aus der Vakuumkammer (8) saugt, um die Vakuumkammer (8) für eine Vakuumvernebelungsbehandlung auf einen vorbestimmten erforderlichen Druck zu bringen; und
- Ausführen (110, 111, 118, 119) der Vakuumvernebelungsbehandlung und Steuern davon, um die vorbestimmte Beschichtungszusammensetzung, die flüssig ist, in einen Nebel von Aerosoltröpfchen zu zerstäuben und Tröpfchen auf mindestens eine Fläche (35, 36) des optischen Artikels (28) zu lenken, um eine Beschichtung zu bilden;
- Entladen (115) des optischen Artikels (28) aus der Vakuumkammer (8).

19. Verfahren nach Anspruch 18, wobei die vorbestimmte flüssige Beschichtungszusammensetzung nach der Vakuumvernebelungsbehandlung eine Deckschicht auf dem optischen Artikel (28) bildet und die Deckschicht konfiguriert ist, dem optischen Artikel (28) eine vorbestimmte Funktion wie schmutzabweisend oder beschlagabweisend zu verleihen.

20. Verfahren nach Anspruch 18, wobei die vorbestimmte flüssige Beschichtungszusammensetzung Monomere aufweist, die nach der Vakuumvernebelungsbehandlung in eine polymere Beschichtung auf dem optischen Artikel (28) polymerisieren können, wie beispielsweise eine universelle Adhäsionsbeschichtung, und das Verfahren nach dem Schritt des Ausführens der Vakuumvernebelungsbehandlung, um die polymere Beschichtung zu bilden, die Schritte aufweist:
- Bewirken (124), dass die Vakuumpumpe (20) Gase aus der Vakuumkammer (8) saugt, um die Vakuumkammer (8) auf einen anderen vorbestimmten erforderlichen Druck für eine weitere Vakuumvernebelungsbehandlung zu bringen;
- Ausführen (111) der weiteren Vakuumvernebelungsbehandlung in der Vakuumkammer (8) und Steuern davon, um eine weitere vorbestimmte Beschichtungszusammensetzung, die flüssig ist, in einen Nebel von Aerosoltröpfchen zu zerstäuben, wobei die Tröpfchen auf mindestens die Fläche (35, 36) des optischen Artikels (28) gelenkt werden, um eine Deckschicht zu bilden, die konfiguriert ist, dem optischen Artikel (28) eine vorbestimmte Funktion wie schmutzabweisend oder beschlagabweisend zu verleihen.

21. Verfahren nach Anspruch 18, wobei die vorbestimmte flüssige Beschichtungszusammensetzung Monomere aufweist, die nach der Vakuumvernebelungsbehandlung in eine polymere Beschichtung auf dem optischen Artikel (28) polymerisieren können, wie beispielsweise eine universelle Adhäsionsbeschichtung, und das Verfahren nach dem Schritt des Ausführens der Vakuumvernebelungsbehandlung, um die polymere Beschichtung zu bilden, die Schritte aufweist:
- Bewirken (127), dass die Vakuumpumpe (20) keine Gase aus der Vakuumkammer (8) saugt;
- Ausführen (126) einer Vakuumverdampfungsbehandlung mit einer Verdampfungsvorrichtung (10) der Maschine (1) und Steuern davon, um den optischen Artikel (28) mit einer schmutzabweisenden oder beschlagabweisenden Beschichtungszusammensetzung neu zu beschichten.

22. Verfahren nach einem der Ansprüche 18 bis 21, wobei die vorbestimmte flüssige Beschichtungszusammensetzung Lösemittel enthält und das Verfahren nach dem Schritt des Ausführens der Vakuumvernebelungsbehandlung, um eine Beschichtung zu bilden, ferner den Schritt des Trocknens (113, 121) des optischen Artikels (28) durch Bewirken, dass die Vakuumpumpe (20) Gase aus der Vakuumkammer (8) saugt, um das Lösemittel zu verdampfen, aufweist.

## Revendications

1. Machine de revêtement d'un article optique (28) avec une composition de revêtement prédéterminée, comprenant :
- une chambre à vide (8) ayant un espace intérieur (31) configurée pour recevoir ledit article optique (28) ;
- une pompe à vide (20) raccordée à ladite chambre à vide (8) ;
- un nébuliseur (40) configuré pour réaliser un traitement de nébulisation sous vide de ladite composition de revêtement prédéterminée pour la déposer sur ledit article optique (28) dans ladite chambre à vide (8) ;
- un générateur de plasma (11) configuré pour réaliser un traitement par plasma sous vide dudit article optique (28) dans ladite chambre à vide (8) ;
- une unité de commande (2) configurée pour commander ladite pompe à vide (20) ;
ledit article optique (28) étant une lentille ophtalmique ;
ladite unité de commande (2) étant configurée pour commander ledit générateur de plasma (11) pour éliminer un revêtement le plus externe initial dudit article optique (28), ou pour activer une surface de l'article optique, et pour amener ladite pompe à vide (20) à aspirer des gaz de ladite chambre à vide (8) pendant le traitement par plasma sous vide ;
ladite unité de commande (2) étant en outre configurée pour amener la pompe à vide (20) à aspirer des gaz de ladite chambre à vide (8) pour amener ladite chambre à vide (8) vers une pression requise prédéterminée pour ledit traitement de nébulisation sous vide ; et
ladite unité de commande (2) et ledit nébuliseur (40) étant en outre configurés pour nébuliser ladite composition de revêtement prédéterminée qui est liquide en une brumaille de gouttelettes aérosol et pour diriger lesdites gouttelettes vers au moins une surface (35, 36) dudit article optique (28).

2. Machine selon la revendication 1, dans laquelle ladite unité de commande (2) est configurée pour commander ledit nébuliseur (40) pour revêtir ledit article optique (28) avec ladite composition de revêtement prédéterminée.

3. Machine selon l'une des revendications 1 et 2, dans laquelle ladite composition de revêtement liquide prédéterminée forme une couche de finition sur ledit article (28) après ledit traitement de nébulisation sous vide, laquelle couche de finition est configurée pour procurer une fonction prédéterminée audit article optique (28), telle qu'une fonction antisalissure ou antibuée.

4. Machine selon l'une des revendications 1 et 2, dans laquelle ladite composition de revêtement liquide prédéterminée comprend des monomères qui peuvent se polymériser en un revêtement polymérique sur ledit article optique (28) après ledit traitement de nébulisation sous vide, tel qu'un revêtement d'adhérence universel qui est configuré pour recevoir une couche de finition prédéterminée.

5. Machine selon la revendication 4, dans laquelle, après ledit traitement de nébulisation sous vide pour former ledit revêtement polymérique, ladite unité de commande (2) et ledit nébuliseur (40) sont en outre configurés pour réaliser un autre traitement de nébulisation sous vide dans ladite chambre à vide (8) par nébulisation d'une autre composition de revêtement prédéterminée qui est liquide en une brumaille de gouttelettes aérosol, lesdites gouttelettes étant dirigées vers au moins ladite surface (35, 36) dudit article optique (28) pour former une couche de finition configurée pour procurer une fonction prédéterminée audit article optique (28), telle qu'une fonction antisalissure ou antibuée, et ladite unité de commande (2) est en outre configurée pour amener ladite pompe à vide (20) à aspirer des gaz de ladite chambre à vide (8) entre lesdits deux traitements de nébulisation sous vide pour amener ladite chambre à vide (8) vers une autre pression requise prédéterminée pour ledit autre traitement de nébulisation sous vide.

6. Machine selon l'une des revendications 4 et 5, comprenant en outre un dispositif d'évaporation (10) configuré pour réaliser un traitement d'évaporation sous vide d'une composition de revêtement antisalissure ou antibuée pour la déposer sur ledit revêtement polymérique déposé par nébulisation sur ledit article optique (28) dans ladite chambre à vide (8), ladite unité de commande (2) étant configurée pour commander ledit dispositif d'évaporation (10) pour revêtir à nouveau ledit article optique (28) avec ladite composition de revêtement antisalissure ou antibuée et étant configurée pour amener ladite pompe à vide (20) à ne pas aspirer des gaz de ladite chambre à vide (8) pendant le traitement d'évaporation sous vide.

7. Machine selon l'une quelconque des revendications 1 à 6, dans laquelle ledit nébuliseur (40) comprend un système de buse (43) et ladite machine (1) comprend en outre un contenant (50) qui contient un volume déterminé de ladite composition de revêtement prédéterminée et au moins un conduit (47) configuré pour raccorder ledit contenant (50) à ladite chambre à vide (8) afin de permettre une communication fluidique entre ledit contenant (50) et ledit nébuliseur (40).

8. Machine selon la revendication 7, dans laquelle ledit système de buse (43) comprend au moins une tête de buse (44) disposée dans ladite chambre à vide (8) et ladite machine (1) comprend en outre au moins un orifice d'admission (42) et au moins un orifice de sortie (45) en communication avec ledit au moins un orifice d'admission (42), ledit au moins un conduit (47) étant en communication fluidique avec ledit au moins un orifice d'admission (42) et ladite au moins une tête de buse (44) étant en communication fluidique avec au moins un orifice de sortie (45).

9. Machine selon l'une des revendications 7 et 8, dans laquelle ledit système de buse (43) est configuré pour diriger lesdites gouttelettes vers au moins une surface (35, 36) dudit article optique (28) selon une projection conique ou pseudo-conique définie par un angle solide prédéterminé.

10. Machine selon l'une quelconque des revendications 7 à 9, comprenant en outre un support (27) sur lequel ledit article optique (28) est configuré pour être reçu, ledit support (27) et ledit système de buse (43) étant configurés pour placer ledit article optique (28) à une distance prédéterminée dudit système de buse (43).

11. Machine selon l'une quelconque des revendications 7 à 10, dans laquelle ledit contenant (50) est configuré pour propulser ledit volume déterminé de ladite composition de revêtement prédéterminée dans ledit au moins un conduit (47) jusqu'audit système de buse (43) où ladite composition de revêtement prédéterminée est nébulisée en ladite brumaille de gouttelettes aérosol dans ladite chambre à vide (8).

12. Machine selon la revendication 11, dans laquelle ledit contenant (50) comprend un gaz propulseur destiné à propulser ledit volume déterminé de ladite composition de revêtement prédéterminée dans ledit au moins un conduit (47) et vers ledit système de buse (43).

13. Machine selon l'une quelconque des revendications 7 à 12, dans laquelle ledit contenant (50) comprend un espace interne (51) contenant ledit volume déterminé de ladite composition de revêtement prédéterminée, ledit espace interne (51) ayant une pression interne qui est égale à ou proche de la pression atmosphérique.

14. Machine selon l'une quelconque des revendications 1 à 13, dans laquelle ladite composition de revêtement prédéterminée est polymérisable, ladite machine (1) comprend en outre un dispositif de polymérisation et ladite unité de commande (2) est en outre configurée pour commander ledit dispositif de polymérisation afin de polymériser ladite composition de revêtement prédéterminée après ledit traitement de nébulisation sous vide.

15. Machine selon la revendication 14, dans laquelle ledit dispositif de polymérisation est formé par au moins une source de lumière d'activation ou par un générateur de plasma (11).

16. Machine selon l'une quelconque des revendications 1 à 15, dans laquelle ladite composition de revêtement prédéterminée contient un solvant et ladite unité de commande (2) est configurée pour amener la pompe à vide (20) à aspirer des gaz de ladite chambre à vide (8) après ledit traitement de nébulisation sous vide pour sécher ledit article optique (28) et évaporer ledit solvant.

17. Machine selon l'une quelconque des revendications 1 à 16, dans laquelle ladite pression requise prédéterminée pour ledit traitement de nébulisation sous vide est comprise entre 100 mbar et 0,01 mbar ou moins, de préférence entre 10 mbar et 0,05 mbar, et de manière davantage préférée entre 1 mbar et 0,1 mbar, dans ladite chambre à vide (8) au début dudit traitement de nébulisation sous vide.

18. Procédé d'utilisation de la machine (1) selon l'une quelconque des revendications 1 à 17, comprenant les étapes de :
- sélection d'un article optique (28) formé par une lentille ophtalmique, ayant un revêtement de base initial ;
- chargement (100) dudit article optique (28) dans un espace interne (31) d'une chambre à vide (8) de ladite machine (1) ;
- réalisation d'un traitement par plasma sous vide avec un générateur de plasma (11) de ladite machine (1) et sa commande pour éliminer un revêtement le plus externe initial dudit article optique (28), ou pour activer une surface de l'article optique ;
- fait d'amener (102) la pompe à vide (20) à aspirer des gaz de ladite chambre à vide (8) pendant ledit traitement par plasma sous vide ;
- raccordement (108, 116) d'un contenant (50) contenant un volume déterminé d'une composition de revêtement liquide prédéterminée à un nébuliseur (40) de ladite machine (1) afin de permettre une communication fluidique entre ledit contenant (50) et ladite chambre à vide (8) ;
- fait d'amener (107, 124) la pompe à vide (20) de ladite machine (1) à aspirer des gaz de ladite chambre à vide (8) pour amener ladite chambre à vide (8) à une pression requise prédéterminée pour un traitement de nébulisation sous vide ; et
- réalisation (110, 111, 118, 119) dudit traitement de nébulisation sous vide et sa commande pour nébuliser ladite composition de revêtement prédéterminée qui est liquide en une brumaille de gouttelettes aérosol et pour diriger lesdites gouttelettes vers au moins une surface (35, 36) dudit article optique (28) afin de former un revêtement ;
- déchargement (115) de l'article optique (28) de la chambre à vide (8).

19. Procédé selon la revendication 18, dans lequel ladite composition de revêtement liquide prédéterminée forme une couche de finition sur ledit article optique (28) après ledit traitement de nébulisation sous vide, laquelle couche de finition est configurée pour procurer une fonction prédéterminée audit article optique (28), telle qu'une fonction antisalissure ou antibuée.

20. Procédé selon la revendication 18, dans lequel ladite composition de revêtement liquide prédéterminée comprend des monomères qui peuvent se polymériser en un revêtement polymérique sur ledit article optique (28) après ledit traitement de nébulisation sous vide, tel qu'un revêtement d'adhérence universel, et ledit procédé comprend en outre, après ladite étape de réalisation dudit traitement de nébulisation sous vide pour former ledit revêtement polymérique, les étapes de :
- fait d'amener (124) ladite pompe à vide (20) à aspirer des gaz de ladite chambre à vide (8) pour amener ladite chambre à vide (8) à une autre pression requise prédéterminée pour un autre traitement de nébulisation sous vide ;
- réalisation (111) dudit autre traitement de nébulisation sous vide dans ladite chambre à vide (8) et sa commande pour nébuliser une autre composition de revêtement prédéterminée qui est liquide en une brumaille de gouttelettes aérosol, lesdites gouttelettes étant dirigées vers au moins ladite surface (35, 36) dudit article optique (28) pour former une couche de finition configurée pour procurer une fonction prédéterminée audit article optique (28), telle qu'une fonction antisalissure ou antibuée.

21. Procédé selon la revendication 18, dans lequel ladite composition de revêtement liquide prédéterminée comprend des monomères qui peuvent se polymériser en un revêtement polymérique sur ledit article optique (28) après ledit traitement de nébulisation sous vide, tel qu'un revêtement d'adhérence universel, et ledit procédé comprend en outre, après ladite étape de réalisation dudit traitement de nébulisation sous vide pour former ledit revêtement polymérique, les étapes de :
- fait d'amener (127) la pompe à vide (20) à ne pas aspirer des gaz de la chambre à vide (8) ;
- réalisation (126) d'un traitement d'évaporation sous vide avec un dispositif d'évaporation (10) de ladite machine (1) et sa commande pour revêtir à nouveau ledit article optique (28) avec une composition de revêtement antisalissure ou antibuée.

22. Procédé selon l'une quelconque des revendications 18 à 21, dans lequel ladite composition de revêtement liquide prédéterminée contient un solvant et ledit procédé comprend en outre, après ladite étape de réalisation dudit traitement de nébulisation sous vide pour former un revêtement, l'étape de séchage (113, 121) dudit article optique (28) en amenant la pompe à vide (20) à aspirer des gaz de ladite chambre à vide (8) afin d'évaporer ledit solvant.
